# EUROPÄISCHE PATENTSCHRIFT

(11) **EP 4 689 814 B1**
(45) Veröffentlichungstag und Bekanntmachung des Hinweises auf die Patenterteilung: **10.06.2026**
(21) Anmeldenummer: 24729829.2
(22) Anmeldetag: 28.05.2024
(51) Int. Cl.: G05B 19/042

(54) **VERFAHREN ZUM GENERIEREN EINES STEUERPROGRAMMS FÜR EIN AUTOMATISIERUNGSSYSTEM UND ENTWICKLUNGSUMGEBUNG**
METHOD FOR GENERATING A CONTROL PROGRAM FOR AN AUTOMATION SYSTEM, AND DEVELOPMENT ENVIRONMENT
PROCÉDÉ DE GÉNÉRATION D'UN PROGRAMME DE COMMANDE POUR UN SYSTÈME D'AUTOMATISATION, ET ENVIRONNEMENT DE DÉVELOPPEMENT

(30) Priorität: 27.09.2023 DE 102023126332
(43) Veröffentlichungstag der Anmeldung: 11.02.2026
(73) Patentinhaber: Beckhoff Automation GmbH, 33415 Verl (DE)
(72) Erfinder: DREESEN, Ralf, 33397 Rietberg (DE)
(74) Vertreter: Patentanwaltskanzlei WILHELM & BECK
(86) Internationale Anmeldenummer: PCT/EP2024/064629
(87) Internationale Veröffentlichungsnummer: WO 2025/067706

(56) Entgegenhaltungen:
- DE-A1- 102020 115 028
- US-A1- 2002 004 804
- YE YIN ET AL: "Research and Implementation of Embedded Soft PLC System", INTELLIGENT NETWORKS AND INTELLIGENT SYSTEMS (ICINIS), 2012 FIFTH INTERNATIONAL CONFERENCE ON, IEEE, 1 November 2012 (2012-11-01), pages 166 - 169, XP032278264, ISBN: 978-1-4673-3083-1, DOI: 10.1109/ICINIS.2012.57

## Beschreibung

Die Patentanmeldung beansprucht die Priorität der deutschen Patentanmeldung 10 2023 126 332.

Die Erfindung betrifft ein Verfahren zum Generieren eines Steuerprogramms für ein Automatisierungssystem und eine Entwicklungsumgebung.

Für die grafische Programmierung von Speicherprogrammierbaren Steuerungen (SPS) in der Automatisierungstechnik sind aus dem Stand der Technik grafische Programmiersprachen bekannt. In der Norm IEC 61131-3 sind drei grafische Programmiersprachen definiert: Kontaktplan, Funktionsbausteinsprache und Ablaufsprache. Die genannten grafischen Programmiersprachen erlauben eine nutzerfreundliche grafische Programmierung, in der durch Hinzufügen und/oder Entfernen vordefinierter grafischer Programmobjekte grafische Diagramme als grafische Repräsentationen für zu erzeugende Steuerprogramme für Speicherprogrammierbare Steuerungen grafisch generiert werden können.

Für eine derartige grafische Programmierung sind aus dem Stand der Technik verschiedene Entwicklungsumgebungen bekannt. Die aus dem Stand der Technik bekannten Entwicklungsumgebungen umfassen hierzu jeweils eine grafische Editoreinheit, in der durch den Nutzer durch Hinzufügen und/oder Entfernen der durch die grafische Programmiersprache vordefinierten grafischen Programmobjekte grafische Diagramme erzeugt werden können.

Die aus dem Stand der Technik bekannten Entwicklungsumgebungen ermöglichen für die genannten grafischen Programmiersprachen jedoch ausschließlich eine grafische Darstellung und Programmierung. Der Nutzer ist somit auf die grafische Programmierung in der grafischen Editoreinheit beschränkt.

Grafische Programmierung hat gegenüber der textuellen Programmierung viele Vorteile, beispielsweise ein vergleichsweise einfaches Erlenen der Programmiersprache. Gleichzeitig hat die grafische Programmierung gegenüber der textuellen Programmierung jedoch ebenfalls einige Nachteile.

Aus der Druckschrift DE 10 2020 115 028 A1 ist ein Verfahren zum Erstellen und Ausführen eines Steuerprogramms zum Steuern eines Automatisierungssystems und Automatisierungssystem bekannt. Aus der Druckschrift US 2002/0004804 A1 ist ein Verfahren zum Speichern und Übertragen einer graphischen Programmiersprache für ein Automatisierungssystem bekannt. Aus der Druckschrift YE YIN ET AL: "Research and Implementation of Embedded Soft PLC System", INTELLIGENT NETWORKS AND INTELLIGENT SYSTEMS (ICINIS), 2012 FIFTH INTERNATIONAL CONFERENCE ON, IEEE, 1. November 2012 (2012-11-01), Seiten 166-169, XP032278264, DOI:10.1109/ICINIS.2012.57 ISBN: 978-1-4673-3083-1 ist ein Verfahren für ein Embedding einer Sift PLC für ein Automatisierungssystem bekannt.

Es ist daher eine Aufgabe der Erfindung, ein verbessertes Verfahren zum Generieren eines Steuerprogramms für ein Automatisierungssystem und eine verbesserte Entwicklungsumgebung bereitzustellen.

Die Aufgabe wird durch das Verfahren und die Entwicklungsumgebung der unabhängigen Ansprüche gelöst. Bevorzugte Ausführungsformen sind in den abhängigen Ansprüchen angegeben.

Nach einem Aspekt der Erfindung wird ein Computerimplementiertes Verfahren zum Generieren eines Steuerprogramms für ein Automatisierungssystem bereitgestellt, umfassend:
Empfangen von Eingabedaten für ein Steuerprogramm eines Automatisierungssystems durch eine Entwicklungsumgebung in einem Empfangsschritt, wobei die Eingabedaten ein grafisches Diagramm einer grafischen Programmiersprache beschreiben, und wobei das grafische Diagramm wenigstens einen Teil eines Steuerprogramms für ein Automatisierungssystem gemäß der grafischen Programmiersprache grafisch abbildet;
Erzeugen des grafischen Diagramms der grafischen Programmiersprache basierend auf den Eingabedaten durch eine grafische Editoreinheit der Entwicklungsumgebung in einem ersten Erzeugungsschritt;
Anzeigen des grafischen Diagramms in der grafischen Editoreinheit der Entwicklungsumgebung in einem ersten Anzeigeschritt;
Übersetzen des grafischen Diagramms der grafischen Programmiersprache in eine textuelle Zwischenrepräsentation des grafischen Diagramms durch einer Übersetzungsmodul der Entwicklungsumgebung in einem ersten Übersetzungsschritt, wobei die textuelle Zwischenrepräsentation eine textuelle Beschreibung des grafischen Diagramms bereitstellt;
Anzeigen der textuellen Zwischenrepräsentation des grafischen Diagramms in einer textuellen Editoreinheit der Entwicklungsumgebung in einem zweiten Anzeigeschritt; und
Erzeugen des Steuerprogramms basierend auf der textuellen Zwischenrepräsentation des grafischen Diagramms der grafischen Programmiersprache und/oder basierend auf dem grafischen Diagramm in einem zweiten Erzeugungsschritt.

Hierdurch kann der technische Vorteil erreicht werden, dass ein verbessertes computerimplementiertes Verfahren zum Generieren eines Steuerprogramms für ein Automatisierungssystem bereitgestellt werden kann. Das erfindungsgemäße Verfahren wird hierbei durch eine entsprechend ausgebildete Entwicklungsumgebung mit einer grafischen Editoreinheit, einer textuellen Editoreinheit und einem Übersetzungsmodul ausgeführt. In der grafischen Editoreinheit ist eine grafische Programmierung gemäß einer grafischen Programmiersprache ermöglicht. In der textuellen Editoreinheit ist eine textuelle Programmierung des Steuerprogramms gemäß der grafischen Programmiersprache ermöglicht.

Über das Übersetzungsmodul ist eine Übersetzung zwischen den mittels der grafischen Programmierung erstellten grafischen Diagrammen der grafischen Programmiersprache und textuellen Zwischenrepräsentationen der grafischen Diagramme ermöglicht.

Das Verfahren sieht hierbei vor, basierend auf Eingabedaten durch die grafische Editoreinheit ein entsprechend einer ausgewählten grafischen Programmiersprache gültiges grafisches Diagramm zu erzeugen und dieses in der grafischen Editoreinheit einem Nutzer der Entwicklungsumgebung darzustellen. Das grafische Diagramm stellt hierbei gemäß den Regeln der ausgewählten grafischen Programmiersprache wenigstens einen Teil des zu generierenden Steuerprogramms der Automatisierungsanlage dar.

Das grafische Diagramm umfasst hierzu grafische Programmobjekte, die Programmobjekten des Steuerprogramms entsprechen.

Über das Übersetzungsmodul wird eine Übersetzung des grafischen Diagramms in eine entsprechende textuelle Zwischenrepräsentation ausgeführt. Die textuelle Zwischenrepräsentation stellt hierbei eine textuelle Beschreibung des grafischen Diagramms inklusive der darin enthaltenen grafischen Programmobjekte dar. Erfindungsgemäß ist die textuelle Zwischenrepräsentation einer für den Nutzer der Entwicklungsumgebung lesbaren Form ausgeführt.

Die durch das Übersetzungsmodul generierte textuelle Zwischenrepräsentation wird daraufhin dem Nutzer in der textuellen Editoreinheit angezeigt. Der Nutzer kann somit durch Einsicht der textuellen Zwischenrepräsentation in der textuellen Editoreinheit die Richtigkeit des grafischen Diagramms überprüfen und somit unmittelbar Fehler des grafischen Diagramms ermitteln. Dies ermöglicht eine verbesserte Programmierung von Steuerprogrammen für Automatisierungssysteme basierend auf grafischen Programmiersprachen.

Insbesondere kann der Nutzer bei Identifikation von Fehlern des grafischen Diagramms durch Einsicht der textuellen Zwischenrepräsentation das grafische Diagramm entsprechend korrigieren beziehungsweise modifizieren, um hierdurch beispielsweise eine zur Ausführung des Steuerprogramms benötigte Rechenkapazität und Laufzeit zu verringern. Dies ermöglicht neben der vereinfachten Programmierung zusätzlich verbesserte Steuerprogramme.

Ferner ist ein Nutzer, der mit textuellen Programmiersprachen nicht vertraut ist, in der Lage, den Programmcode anhand der grafischen Darstellung einfacher zu interpretieren und Fehler im Programmcode oder an der Maschine schneller zu erkennen und zu beheben. Ausfallzeiten des zu steuernden Automatisierungssystems können somit substantiell reduziert werden. Im Gegenzug hat ein versierter Nutzer, beispielsweise ein Software-Entwickler, der mit allen verwendeten textuellen und grafischen Programmiersprachen vertraut ist, mehr Möglichkeiten, effizienter und zielführender zu generieren, wenn der Nutzer in einer textuellen Programmiersprache generieren kann.

Abschließend sieht das erfindungsgemäße Verfahren vor, basierend auf dem grafischen Diagramm und/oder basierend auf der textuellen Zwischenrepräsentation des grafischen Diagramms das entsprechend programmierte Steuerprogramm zu erzeugen. Das Steuerprogramm kann somit unmittelbar basierend auf der textuellen Zwischenrepräsentation des grafischen Diagramms erzeugt werden. Es wird somit keine zusätzliche textuelle Zwischenrepräsentation für das grafische Diagramm benötigt, die ausschließlich zum Abspeichern beziehungsweise Kompilieren des Steuerprogramms basierend auf dem grafischen Diagramm benötigt wird.

Stattdessen wird unmittelbar die textuelle Zwischenrepräsentation, die zuvor dem Nutzer in der textuellen Editoreinheit zur Überprüfung angezeigt wurde, und die in einer für den Nutzer lesbaren Form verfasst ist, als Zwischenrepräsentation zum Abspeichern des basierend auf dem grafischen Diagramm der grafischen Programmiersprache erstellten Steuerprogramms und zum Kompilieren des Steuerprogramms verwendet.

Hierdurch wird eine weitere Vereinfachung der Programmierung des Steuerungsprogramms basierend auf der grafischen Programmiersprache erreicht, die lediglich eine textuelle Zwischenrepräsentation der grafischen Diagramme verwendet, sowohl zum Abspeichern des Steuerprogramms als auch zum Kompilieren des Steuerprogramms und zusätzlich dazu zur Anzeige und Überprüfung des entsprechenden grafischen Diagramms durch den Nutzer.

Durch die Berücksichtigung der textuellen Zwischenrepräsentation ist ferner eine gute Verträglichkeit des erstellten Programmcodes mit Versionskontrollsystemen gegeben. Insbesondere kann der erstellte Programmcode in textueller Form der textuellen Zwischenrepräsentation abgespeichert werden. Der derart abgespeicherte Programmcode kann problemlos in Versionskontrollsystemen verwaltet werden.

Darüber hinaus kann bei Speicherung des Programmcodes in textueller Form der benötigte Speicherplatz reduziert werden.

Das erfindungsgemäße Verfahren erlaubt ferner einen nahtlosen Wechsel zwischen textueller und grafischer Programmierung und Darstellung: Der Entwickler kann nach Vorliebe oder je nach vorliegendem Fall die Entwicklung des Programmcodes in textueller oder grafischer Programmierung ausführen.

Auch wenn eine Ablaufsteuerung des Automatisierungssystems textuell programmiert wird, kann sie und ihr aktueller Fortschritt dem Nutzer grafisch, beispielsweise auf einer Bedienschnittstelle (HMI), dargestellt werden. Dies ermöglicht ein leichteres Verständnis des Programmcodes und der Vorgänge innerhalb des Automatisierungssystems.

Ferner ist durch die textuelle Zwischenrepräsentation ein geschlossenes Kopieren, Löschen und Verschieben von vollständigen ausführbaren Programmobjekten ermöglicht.

Beispielsweise kann ein Nutzer ein Verhalten einer Maschinensteuerung durch Änderungen eines ausführbaren Programmobjektes ändern, wobei die Änderungen beispielsweise in grafischer Form ausgeführt werden. Der Nutzer kann darauffolgend das geänderte ausführbare Programmobjekt als zusammenhängenden Text, beispielswese per E-Mail, Fax, Brief, Diktat, Telegramm, Steintafel, an einen Mitarbeiter übertragen. Der Mitarbeiter ist darauf in der Lage, das aktive ausführbare Programmobjekt durch das übertragene Programmobjekt zu ersetzen und so das Verhalten der Maschine konsistent in einem Schritt zu ändern.

Ferner ermöglicht die textuelle Zwischenrepräsentation eine gute Übersichtlichkeit für den Nutzer, z.B. durch die vollständige Darstellung einer Klasse in einem Texteditor, einschließlich der Verhalten aller Methoden der Klasse.

Darüber hinaus ermöglicht das Verfahren eine einfache Generierung von Programmcode, der ausführbare Programmobjekte mit textualisiertem Verhalten enthält.

Ein Maschinenbauer bietet beispielsweise eine Maschine in einer Vielzahl von Varianten an, die sich als Kombinationen verschiedener Parameter ergeben, wobei die Parameter durch einen Kunden vorgegeben werden. Die Varianten unterscheiden sich sowohl im physischen Aufbau der Maschine, als auch im Steuerungsprogramm.

Auf Grundlage der Parameter werden die variantenspezifischen Teile des Steuerungsprogramms durch einen Code-Generator als Text erzeugt. Dies kann auch ein grafisches Verhalten umfassen, z.B. eine variantenspezifische Ablaufsteuerung in AS Ablaufsprache oder einen variantenspezifischen Regelungsalgorithmus in FBS Funktionsbausteinsprache. Die Code-Generierung ist im Gegensatz zu einer händischen Anpassung automatisiert und kann in einen Bestellprozess integriert werden.

Ferner ermöglicht das Verfahren einfache und schnelle Änderungen eines grafischen Programmcodes durch Änderung des textualisierten Programmcodes, beispielsweise durch eine textuelle Suchen/Ersetzen-Funktion.

Die Eingabedaten des grafischen Diagramms beschreiben erfindungsgemäß Eigenschaften der grafischen Programmobjekte des grafischen Diagramms und sind geeignet, durch die grafische Editoreinheit eingelesen zu werden und ermöglichen der grafischen Editoreinheit ein entsprechendes grafisches Diagramm zu erzeugen.

Ein grafisches Diagramm einer grafischen Programmiersprache ist im Sinne der Anmeldung eine grafische Darstellung gemäß den Regeln der jeweiligen grafischen Programmiersprache eines durch die grafische Programmiersprache erstellbaren Steuerprogramms. Das grafische Diagramm umfasst wenigstens ein grafisches Programmobjekt.

Das grafische Programmobjekt ist eine grafische Darstellung eines Programmobjekts des jeweiligen Steuerprogramms.

Das grafische Diagramm ist in einer entsprechenden Anzeigeeinheit einer grafischen Editoreinheit gemäß den Regeln der grafischen Programmiersprache grafisch anzeigbar. Die Anzeigeeinheit ist als ein Softwaremodul der grafischen Editoreinheit ausgebildet.

Nach einer Ausführungsform umfasst der Empfangsschritt:
Empfangen von grafischen Eingabebefehlen eines Nutzers einer Entwicklungsumgebung durch die grafische Editoreinheit der Entwicklungsumgebung in einem ersten Programmierschritt, wobei die Eingabedaten die grafischen Eingabebefehle umfassen, wobei die grafischen Eingabebefehle Programmierbefehle zu einem Hinzufügen und/oder einem Entfernen von grafischen Programmobjekten des grafischen Diagramms umfassen, und wobei die grafischen Programmobjekte Teilelemente des grafischen Diagramms sind und ausführbare Programmobjekte des Steuerprogramms repräsentieren.

Hierdurch kann der technische Vorteil erreicht werden, dass durch das erfindungsgemäße Verfahren eine grafische Programmierung des Steuerprogramms berücksichtigt werden kann. Hierbei sind die Eingabedaten durch grafische Programmierbefehle des Nutzers der Entwicklungsumgebung gegeben. In der vorliegenden Ausführungsform wird somit der Fall beschrieben, dass der Nutzer durch Eingabe entsprechender Eingabebefehle in der grafischen Editoreinheit das grafische Diagramm erstellt beziehungsweise modifiziert, beispielsweise durch Hinzufügen oder Entfernen entsprechender grafischer Programmobjekte.

Die Eingabedaten werden somit, gegebenenfalls ausschließlich, durch die Eingabebefehle des Nutzers während des grafischen Programmiervorgangs erstellt, indem der Nutzer gemäß den Regeln der grafischen Programmiersprache der grafischen Editoreinheit ein bereits bestehendes grafisches Diagramm modifiziert oder von Grund auf ein neues grafisches Diagramm erzeugt. Dieses durch den grafischen Programmiervorgang modifizierte oder neu erzeugte grafische Diagramm wird gemäß den oben beschriebenen Ausführungen darauf folgend in eine entsprechende textuelle Zwischenrepräsentation übersetzt und diese in der textuellen Editoreinheit dem Nutzer angezeigt.

Darauffolgend wird basierend auf dem im grafischen Programmiervorgang erstellten grafischen Diagramm und/oder basierend auf der entsprechenden textuellen Zwischenrepräsentation das zu generierende Steuerprogramm erzeugt. Der Nutzer kann somit in der dargestellten Ausführungsform durch Ausführen der grafischen Eingabebefehle in der grafischen Editoreinheit gemäß den Regeln der ausgewählten grafischen Programmiersprache ein entsprechendes grafisches Diagramm modifizieren oder neu generieren.

Das entsprechend im grafischen Programmiervorgang modifizierte oder neu erstellte grafische Diagramm wird darauffolgend in eine entsprechende für den Nutzer lesbare textuelle Zwischenrepräsentation übersetzt und dem Nutzer der textuellen Editoreinheit zur Überprüfung angezeigt.

Nach einer Ausführungsform umfasst der Empfangsschritt:
Einlesen einer Programmdatei in einem Leseschritt, wobei in der Programmdatei die Eingabedaten des grafischen Diagramms in textueller Form enthalten sind, wobei durch die Eingabedaten die grafischen Programmobjekte des grafischen Diagramms textuell beschrieben sind; und wobei der erste Erzeugungsschritt umfasst:
Übersetzen der textuellen Eingabedaten in das grafische Diagramm durch das Übersetzungsmodul in einem zweiten Übersetzungsschritt.

Hierdurch kann der technische Vorteil erreicht werden, dass in der angesprochenen Ausführungsform das grafische Diagramm basierend auf einer vorgespeicherten Programmdatei, in der die Eingabedaten enthalten sind, generiert wird. In der angesprochenen Ausführungsform wird somit der Fall beschrieben, in dem ein in einem zeitlich früheren grafischen Programmiervorgang bereits erzeugtes grafisches Diagramm, das in einer textuellen Form in der vorgespeicherten Programmdatei abgespeichert ist, durch die Entwicklungsumgebung eingelesen wird und dem Nutzer in Form des grafischen Diagramms in der grafischen Editoreinheit und in Form der durch den Übersetzungsprozess erzeugten und für den Nutzer in lesbarer Form abgefassten textuellen Zwischenrepräsentation in der entsprechenden textuellen Editoreinheit angezeigt wird.

Hierauf basierend kann der Nutzer gemäß der oben beschriebenen Ausführungsform einen weiteren grafischen Programmiervorgang ausführen und gemäß den beschriebenen grafischen Eingabebefehlen die grafische Zwischenrepräsentation durch Hinzufügen oder Entfernen von grafischen Programmobjekten entsprechend modifizieren.

Nach einer Ausführungsform umfasst das Verfahren ferner:
Empfangen von textuellen Eingabebefehlen des Nutzers durch die textuelle Editoreinheit der Entwicklungsumgebung in einem textuellen Programmierschritt, wobei durch die textuellen Eingabebefehle textuelle Programmobjekte als textuelle Repräsentationen von entsprechenden grafischen Programmobjekten des grafischen Diagramms zu der textuellen Zwischenrepräsentation des grafischen Diagramms hinzugefügt oder von dieser entfernt werden;
Erzeugen einer modifizierten textuellen Zwischenrepräsentation basierend auf den textuellen Eingabebefehlen und der textuellen Zwischenrepräsentation des grafischen Diagramms in einem dritten Erzeugungsschritt;
Übersetzen der modifizierten textuellen Zwischenrepräsentation in ein entsprechend modifiziertes grafisches Diagramm der grafischen Programmiersprache und/oder Übersetzen von durch die textuellen Eingabebefehle bewirkten textuellen Modifikationen der textuellen Zwischenrepräsentation in grafische Modifikationen des grafischen Diagramms durch das Übersetzungsmodul in einem dritten Übersetzungsschritt, wobei die textuellen Modifikation wenigstens ein neu hinzugefügtes oder gelöschtes textuelles Programmobjekt umfassen, und wobei die grafischen Modifikationen wenigstens ein neu hinzugefügtes oder gelöschtes grafisches Programmobjekt umfassen;
Anzeigen des modifizierten grafischen Diagramms anstelle des grafischen Diagramms und/oder Anzeigen der grafischen Modifikationen im grafischen Diagramm in der grafischen Editoreinheit (201) in einem dritten Anzeigeschritt; und
Erzeugen des Steuerprogramms basierend auf der modifizierten textuellen Zwischenrepräsentation des modifizierten grafischen Diagramms und/oder basierend auf dem modifizierten grafischen Diagramm im zweiten Erzeugungsschritt.

Hierdurch kann der technische Vorteil erreicht werden, dass durch das beschriebene Verfahren dem Nutzer der Entwicklungsumgebung basierend auf der textuellen Zwischenrepräsentation durch Ausführen eines textuellen Programmiervorgangs unter Berücksichtigung der textuellen Editoreinheit eine Modifizierung des vorliegenden grafischen Diagramms ermöglicht ist. Der Nutzer kann somit durch Ausführen eines textuellen Programmiervorgangs an der in der textuellen Editoreinheit angezeigten textuellen Zwischenrepräsentation des grafischen Diagramms Änderungen vornehmen und hierüber eine modifizierte textuelle Zwischenrepräsentation erstellen.

Hierdurch kann ein substantieller praktischer und zeitlicher Nutzen im Programmiervorgang erreicht werden, indem in der textuellen Darstellung des Programmcodes beispielsweise Programmteile automatisch umbenannt oder ersetzt oder verändert werden können. Derartige Vorgänge sind in der grafischen Darstellung wesentlich aufwändiger, da es hier keine automatische Suche/Ersetzen Funktion gibt.

Hierzu kann der Nutzer entsprechende Eingabebefehle in die textuelle Editoreinheit eingeben, um hierüber die angezeigte textuelle Zwischenrepräsentation zu modifizieren. Die textuellen Eingabebefehle umfassen hierbei das Hinzufügen oder Entfernen von textuellen Programmobjekten der textuellen Zwischenrepräsentation. Die textuellen Programmobjekte sind erfindungsgemäß textuelle Repräsentationen der grafischen Programmobjekte des grafischen Diagramms. Die grafischen Programmobjekte sind durch die Regeln der ausgewählten grafischen Programmiersprache vordefiniert.

Bei Änderung der textuellen Zwischenrepräsentation im textuellen Programmiervorgang empfängt somit die textuelle Editoreinheit die entsprechend durch den Nutzer eingegebenen textuellen Eingabebefehle und führt eine entsprechende Änderung der in der textuellen Editoreinheit angezeigten textuellen Zwischenrepräsentation aus. Hierdurch wird eine modifizierte textuelle Zwischenrepräsentation generiert.

Darauf folgend wird durch das Übersetzungsmodul eine Übersetzung der modifizierten textuellen Zwischenrepräsentation ausgeführt und ein entsprechend modifiziertes grafisches Diagramm erzeugt. Das grafische Diagramm wird darauf folgend dem Nutzer in der grafischen Editoreinheit angezeigt.

Der Nutzer kann somit das zuvor basierend auf den Eingabedaten, sprich auf den im grafischen Programmiervorgang ausgeführten grafischen Eingabebefehlen oder basierend auf der Programmdatei, generierte grafische Diagramm durch Ausführen eines textuellen Programmiervorgangs in der textuellen Editoreinheit modifizieren und hierauf basierend eine modifizierte textuelle Zwischenrepräsentation und ein entsprechend modifiziertes grafisches Diagramm erzeugen.

Das modifizierte grafische Diagramm und die modifizierte textuelle Zwischenrepräsentation stellen hierbei grafische und textuelle Entsprechungen ein und desselben zu erzeugenden Steuerprogramms dar. Gleiches gilt für das oben beschriebene grafische Diagramm und die entsprechende textuelle Zwischenrepräsentation.

Die angesprochene Ausführungsform des erfindungsgemäßen Verfahrens stellt dem Nutzer somit die Möglichkeit bereit, das Steuerprogramm in der ausgewählten grafischen Programmiersprache sowohl in einem grafischen Programmiervorgang als auch in einem textuellen Programmiervorgang zu erzeugen. Der Nutzer kann beliebig zwischen der grafischen Programmierung und der textuellen Programmierung wechseln, da die in der grafischen Editoreinheit ausgeführten Änderungen unmittelbar in der entsprechenden textuellen Zwischenrepräsentation und umgekehrt durch den Nutzer in der textuellen Zwischenrepräsentation ausgeführten Änderungen unmittelbar in dem entsprechenden grafischen Diagramm berücksichtigt werden.

Das grafische Diagramm und die textuelle Zwischenrepräsentation stellen hierbei somit zu jeder Zeit eine eindeutige Entsprechung des jeweils anderen dar, unabhängig davon, in welcher Editoreinheit Änderungen durch den Nutzer vorgenommen wurden.

Hierdurch wird der Programmiervorgang weiter substantiell erleichtert. So sind einige Vorgänge des Generierens des Steuerprogramms einfacher in der grafischen Editoreinheit auszuführen, während andere Vorgänge textuell einfacher zu bewerkstelligen sind. Beispielsweise ist das Vervielfachen von Programmobjekten in der textuellen Zwischenrepräsentation einfach durch Copy & Paste wesentlich einfacher auszuführen, als dies im grafischen Diagramm ermöglicht ist, in dem jedes grafische Programmobjekt einzeln vervielfacht und mit den bereits bestehenden grafischen Programmobjekten verknüpft werden muss.

Hierdurch kann darüber hinaus eine Vereinfachung des am Ende resultierenden Steuerprogramms erreicht werden, indem durch die Berücksichtigung der textuellen Programmierung in der textuellen Editoreinheit gegebenenfalls ein vereinfachtes grafisches Diagramm erzeugt werden kann, das zu einem vereinfachten Steuerprogramm mit reduzierter Laufzeit und reduzierter Rechenkapazität führen kann.

Nach einer Ausführungsform umfasst das Verfahren ferner:
Anzeigen der modifizierten textuellen Zwischenrepräsentation des modifizierten grafischen Diagramms in der textuellen Editoreinheit in einem vierten Anzeigeschritt.

Hierdurch kann der technische Vorteil erreicht werden, dass durch das Anzeigen der im textuellen Programmiervorgang modifizierten textuellen Zwischenrepräsentation in der textuellen Editoreinheit dem Benutzer die Möglichkeit bereitgestellt ist, basierend auf der angezeigten modifizierten textuellen Zwischenrepräsentation Fehler oder Schwächen des über die textuelle Programmierung erzeugten und der modifizierten textuellen Zwischenrepräsentation entsprechenden modifizierten grafischen Diagramms zu erkennen.

Nach einer Ausführungsform umfasst der erste Übersetzungsschritt ferner:
Ermitteln der grafischen Programmobjekte und eines grafischen Verhaltens des grafischen Diagramms in einem Verhaltensermittlungsschritt, wobei das grafische Verhalten eine grafische Repräsentation eines Programmablaufs des Steuerprogramms beschreibt; und
Übersetzen der grafischen Programmobjekte und des grafischen Verhaltens des grafischen Diagramms in textuelle Programmobjekte und ein textuelles Verhalten der textuellen Zwischenrepräsentation in einem Verhaltensübersetzungsschritt, wobei das textuelle Verhalten eine textuelle Zwischenrepräsentation des Ablaufs des Steuerprogramms darstellt.

Hierdurch kann der technische Vorteil erreicht werden, dass eine präzise Übersetzung zwischen den grafischen Diagrammen und den entsprechenden textuellen Zwischenrepräsentationen ermöglicht ist. Hierzu werden zunächst die grafischen Programmobjekte des grafischen Diagramms ermittelt und im Übersetzungsprozess individuell in entsprechende textuelle Programmobjekte übersetzt.

Wie oben bereits ausgeführt, sind die grafischen Programmobjekte durch die Regeln der entsprechend ausgewählten grafischen Programmiersprache vordefiniert und entsprechen Programmobjekten des zu generierenden Steuerprogramms. Die entsprechenden textuellen Programmobjekte sind textuelle Repräsentationen der jeweiligen grafischen Programmobjekte des grafischen Diagramms und stellen somit die entsprechend ausführbaren Programmobjekte des Steuerprogramms in textueller Form dar.

Die textuellen Programmobjekte sind somit keine eigenständigen Programmobjekte, sondern sind primär textuelle Entsprechungen der grafischen Programmobjekte des grafischen Diagramms, die wie gesagt durch die Regeln der grafischen Programmsprache vordefiniert sind.

Ferner wird im grafischen Diagramm ein grafisches Verhalten ermittelt. Das grafische Verhalten beschreibt hierbei einen Programmablauf des grafischen Diagramms und definiert Verknüpfungen der einzelnen grafischen Programmobjekte untereinander innerhalb des grafischen Diagramms. Durch das grafische Verhalten ist somit die programmtechnisch zeitliche Ausführung der einzelnen grafischen Programmobjekte und die Interaktion der einzelnen grafischen Programmobjekte innerhalb des grafischen Diagramms definiert.

Basierend auf dem grafischen Verhalten wird ein entsprechendes textuelles Verhalten generiert. Das textuelle Verhalten beschreibt hierbei in entsprechender Weise einen Programmablauf innerhalb der textuellen Zwischenrepräsentation und ist eine textuelle Entsprechung des grafischen Verhaltens. Im textuellen Verhalten wird entsprechend dem grafischen Verhalten die programmtechnisch zeitliche Ausführung der einzelnen textuellen Programmobjekte und die Verknüpfung der textuellen Programmobjekte untereinander in der textuellen Zwischenrepräsentation definiert.

Im Zuge der Ermittlung des grafischen Verhaltens können für die grafischen Programmobjekte ferner grafische Objektpositionen ermittelt werden. Die grafischen Objektpositionen beschreiben hierbei Positionen der einzelnen grafischen Objekte innerhalb des grafischen Diagramms bzw. des grafischen Verhaltens. Mit den grafischen Objektpositionen der einzelnen grafischen Programmobjekte sind damit den einzelnen grafischen Programmobjekten Stellen innerhalb des Ablaufs des grafischen Diagramms zugewiesen, mittels denen eine Anordnung der einzelnen grafischen Programmobjekte relativ zueinander definiert ist.

Über die grafischen Objektpositionen der grafischen Programmobjekte kann somit eine Ausführungsreihenfolge der grafischen Programmobjekte innerhalb des grafischen Diagramms bzw. des grafischen Verhaltens definiert werden. Über die grafischen Objektpositionen können die einzelnen grafischen Programmobjekte somit einander zugeordnet werden und es kann ein Programmablauf definiert werden, in dem eine Ausführung der grafischen Programmobjekte entsprechend der jeweiligen den grafischen Programmobjekte zugewiesenen grafischen Objektpositionen erfolgt.

Im Übersetzungsvorgang können die grafischen Objektpositionen der grafischen Programmobjekte in entsprechende textuelle Objektpositionen der jeweiligen textuellen Programmobjekte umgewandelt werden.

Die textuellen Objektpositionen der jeweiligem textuellen Programmobjekte definieren entsprechend eine Reihenfolge der Anordnung der textuellen Programmobjekte innerhalb des textuellen Verhaltens und eine entsprechende Programmabfolge des Steuerprogramms.

Ein Verhalten ist im Sinne der Anmeldung eine Beschreibung einer Funktionsweise bzw. einer Wirkungsweise einer Funktion des Programms. Das Verhalten umfasst z.B. eine Vorgehensweise, wie ein Funktionsergebnis der Funktion auf Grundlage der Parameter der Funktion berechnet wird.

Nach einer Ausführungsform umfasst der erste Übersetzungsschritt:
Ausführen einer zeilenweisen Übersetzung in einem Zeilenübersetzungsschritt, wobei in der zeilenweise Übersetzung jedem grafischen Programmobjekt wenigsten ein textuelles Programmobjekt in Gestalt wenigstens einer textuellen Zeile der textuellen Zwischenrepräsentation zugeordnet wird, und wobei durch die textuellen Zeilen eindeutige Beschreibungen der jeweiligen grafischen Programmobjekte gegeben sind.

Hierdurch kann der technische Vorteil erreicht werden, dass durch die zeilenweise Übersetzung die den grafischen Programmobjekten des grafischen Diagramms entsprechenden textuellen Programmobjekte jeweils durch wenigstens eine textuelle Zeile dargestellt sind. Durch die zeilenweise Darstellung der textuellen Programmobjekte in der textuellen Zwischenrepräsentation ist eine einfache Lesbarkeit der textuellen Zwischenrepräsentation durch den Nutzer gewährleistet. Die textuellen Programmobjekte sind somit vorzugsweise in genau einer textuellen Zeile innerhalb der textuellen Zwischenrepräsentation dargestellt.

Dies erleichtert die Lesbarkeit der textuellen Zwischenrepräsentation, indem die einzelnen textuellen Programmobjekte eindeutig voneinander getrennt sind und durch die zeilenweise Aufteilung einfach zu erfassen sind. Dies erleichtert neben der Lesbarkeit auch die Programmierung, insbesondere innerhalb der textuellen Programmierung. Durch die zeilenweise Übersetzung kann ferner erreicht werden, dass die textuelle Zwischenrepräsentation des Programmcodes in einem Versionskontrollsystem verwaltet werden kann.

Nach einer Ausführungsform umfasst der erste Übersetzungsschritt:
Anordnen des textuellen Verhaltens an einer Verhaltensposition innerhalb der textuellen Zwischenrepräsentation in einem Anordnungsschritt, wobei die Verhaltensposition eine durch eine Norm IEC 61131-3 vordefinierte Position in einem Programmcode definiert, an der ein Verhalten eines Steuerprogramms zu positionieren ist.

Hierdurch kann der technische Vorteil erreicht werden, dass durch das Anordnen des textuellen Verhaltens innerhalb der textuellen Zwischenrepräsentation an der dafür vorgesehenen Verhaltensposition die textuelle Zwischenrepräsentation den Anforderungen der Norm IEC 61131-3 entspricht. Ferner ist der zusammenhängende Code der textuellen Zwischenrepräsentation durch den Nutzer einfacher lesbar, da das Verhalten an der dafür vorgesehenen Position angeordnet ist.

Eine Verhaltensposition definiert im Sinne der Anmeldung eine Stelle innerhalb des Programmcodes, an der das Verhalten zu stehen hat. Die Verhaltensposition kann durch Richtlinien der jeweiligen Programmiersprache festgelegt sein. Im Automatisierungsbereich und den dort verwendeten Programmiersprachen kann die Verhaltensposition in der Norm IEC 61131-3 festgelegt sein.

Nach einer Ausführungsform umfasst der erste Erzeugungsschritt:
Ermitteln von Identitäten der grafischen Programmobjekte des grafischen Diagramms in einem Identitätsermittlungsschritt, wobei über die Identitäten der grafischen Programmobjekte eine eindeutige Identifizierung der jeweiligen grafischen Programmobjekte ermöglicht ist; und wobei der Zeilenübersetzungsschritt umfasst:
Integrieren der Identitäten der grafischen Programmobjekte in die jeweiligen den grafischen Programmobjekten zugeordneten textuellen Zeilen der textuellen Zwischenrepräsentation in einem Integrationsschritt.

Hierdurch kann der technische Vorteil erreicht werden, dass durch das Ermitteln der Identitäten der grafischen Programmobjekte und das Integrieren der jeweiligen Identitäten in die entsprechenden textuellen Programmobjekte eine eindeutige Entsprechung der grafischen Programmobjekte des grafischen Diagramms mit den textuellen Programmobjekten der textuellen Zwischenrepräsentation gewährleistet ist. Darüber hinaus kann durch die Integration der Identitäten der grafischen Programmobjekte in die entsprechenden textuellen Programmobjekte gewährleistet werden, dass Verknüpfungen der grafischen Programmobjekte im grafischen Diagramm in den textuellen Programmobjekten der textuellen Zwischenrepräsentation fehlerfrei berücksichtigt werden.

Durch die eindeutige Angabe der Identitäten innerhalb der textuellen Programmobjekte, durch die neben der Identifizierung der jeweiligen textuellen Programmobjekte auch die Verknüpfung mit weiteren textuellen Programmobjekten angezeigt ist, kann wiederum die Richtigkeit der textuellen Zwischenrepräsentation in Bezug auf das grafische Diagramm durch den Nutzer leicht durch Einblick in die in der textuellen Editoreinheit angezeigten textuellen Zwischenrepräsentation ermittelt werden.

Dies erleichtert wiederum die Überprüfung der Richtigkeit der textuellen Zwischenrepräsentation, was wiederum einen erleichterten Programmiervorgang ermöglicht, was wiederum zu verbesserten Steuerprogrammen führen kann.

Nach einer Ausführungsform umfasst das Verfahren ferner:
Zusammenfassen der textuellen Zwischenrepräsentation des grafischen Diagramms mit wenigstens einer weiteren Zwischenrepräsentation wenigstens eines weiteren grafischen Diagramms zu einer textuellen Gesamtzwischenrepräsentation in einem Zusammenfassungsschritt, wobei in der Gesamtzwischenrepräsentation eine Mehrzahl von verschiedenen textuellen Zwischenrepräsentationen einer Mehrzahl verschiedener grafischer Diagramme zu einem zusammenhängenden Code in textueller Form zusammengefasst sind.

Hierdurch kann der technische Vorteil erreicht werden, dass in Gestalt der textuellen Gesamtzwischenrepräsentation ein zusammenhängender Code des gesamten Steuerprogramms bereitgestellt werden kann. Einzelne ausführbare Objekte des Steuerprogramms können durch unterschiedliche grafische Diagramme, gegebenenfalls auch unter Verwendung unterschiedlicher grafischer Programmiersprachen, dargestellt beziehungsweise programmiert werden. Die jeweiligen textuellen Zwischenrepräsentationen können in der textuellen Gesamtzwischenrepräsentation zusammengefasst werden. Hierdurch ist zur Darstellung des gesamten Steuerprogramms nur ein zusammenhängender Code in Gestalt der textuellen Gesamtzwischenrepräsentation nötig.

Der Text der textuellen Gesamtzwischenrepräsentation ist darüber hinaus als zusammenhängender Text durch den Nutzer lesbar. Das gesamte Steuerprogramm ist somit in einer gemeinsamen Datei gespeichert und dieses liegt dem Nutzer in einer lesbaren Form vor. Die Verhalten der jeweiligen grafischen Diagramme ist hierbei in der textuellen Gesamtzwischenrepräsentation an den durch die Norm IEC 61131-3 festgelegten Verhaltenspositionen angeordnet. Durch die textuelle Gesamtzwischenrepräsentation ist somit eine textuelle Form eines ausführbaren Steuerprogramms bereitgestellt, das den Anforderungen der Norm IEC 61131-3 genügt.

Nach einer Ausführungsform umfasst der zweite Erzeugungsschritt:
Ausführen eines Debugging-Vorgangs basierend auf der textuellen Zwischenrepräsentation des grafischen Diagramms in einem Debuggingschritt.

Hierdurch kann der technische Vorteil erreicht werden, dass ein Debugging des erstellten Steuerprogramms unmittelbar basierend auf der textuellen Zwischenrepräsentation des grafischen Diagramms ermöglicht ist. Die textuelle Zwischenrepräsentation stellt somit nicht nur eine textuelle Darstellung des grafischen Diagramms, die dem Nutzer zu Korrekturzwecken in der textuellen Editoreinheit angezeigt werden kann, dar. Die textuelle Zwischenrepräsentation wird auch in weiteren Kompiliervorgängen des Steuerprogramms unmittelbar als Basis verwendet.

Das grafische Diagramm stellt hingegen lediglich eine grafische Repräsentation der textuellen Zwischenrepräsentation dar, die dem Nutzer in der grafischen Editoreinheit angezeigt werden kann und die der Nutzer durch den grafischen Programmiervorgang, wie dieser für grafische Programmiersprachen im Stand der Technik bekannt ist, modifizieren kann. Die textuelle Zwischenrepräsentation stellt hingegen die für das Erzeugen des Steuerprogramms im Kompiliervorgang maßgebliche Repräsentation dar.

Nach einer Ausführungsform umfasst der zweite Erzeugungsschritt:
Erzeugen einer Binärdarstellung des Steuerprogramms in einem Binärcodeerzeugungsschritt.

Hierdurch kann der technische Vorteil erreicht werden, dass durch die Binärdarstellung des Steuerprogramms eine ausführbare Darstellung des Steuerprogramms bereitgestellt werden kann.

Nach einer Ausführungsform umfasst das Verfahren ferner:
Speichern der textuellen Darstellung in einer Darstellungsdatei in einem Speicherschritt.

Hierdurch kann der technische Vorteil erreicht werden, dass durch das Abspeichern der textuellen Zwischenrepräsentation in einer Darstellungsdatei das Steuerprogramm speicherbar ist. Wie oben dargelegt, kann durch Einlesen der Darstellungsdatei in Form einer Programmdatei durch die Entwicklungsumgebung die entsprechende textuelle Zwischenrepräsentation in ein entsprechendes grafisches Diagramm umgewandelt und dem Nutzer zur weiteren Verarbeitung in der grafischen Editoreinheit angezeigt werden.

Nach einer Ausführungsform ist die grafische Programmiersprache eine aus der folgenden Gruppe: Kontaktplan, Funktionsbausteinsprache, Ablaufsprache.

Hierdurch kann der technische Vorteil erreicht werden, dass das erfindungsgemäße Verfahren auf die in der Automatisierungstechnik gängigen und in der Norm IEC 61131-3 definierten grafischen Programmiersprachen anwendbar ist.

Nach einer Ausführungsform steht eine Syntax der textuellen Zwischenrepräsentation und der modifizierten textuellen Zwischenrepräsentation in einer Konfliktfreiheit zu einer Syntax der grafischen Programmiersprache.

Hierdurch kann der technische Vorteil erreicht werden, dass durch die Konfliktfreiheit der Syntax der textuellen Zwischenrepräsentation mit der Syntax der grafischen Programmiersprache eine eindeutige und zur Programmierung eines Steuerprogramms basierend auf der grafischen Programmiersprache zuverlässig verwendbare textuelle Zwischenrepräsentation bereitgestellt werden kann.

Nach einem Aspekt wird eine Entwicklungsumgebung mit einer grafischen Editoreinheit, einer textuellen Editoreinheit und einem Übersetzungsmodul bereitgestellt, wobei die Entwicklungsumgebung eingerichtet ist, das Verfahren zum Generieren eines Steuerprogramms für ein Automatisierungssystem nach einer der voranstehenden Ausführungsformen auszuführen.

Hierdurch kann der technische Vorteil erreicht werden, dass eine verbesserte Entwicklungsumgebung bereitgestellt werden kann, die eingerichtet ist das erfindungsgemäße Verfahren zum Generieren eines Steuerprogramms für ein Automatisierungssystem mit den oben genannten technischen Vorteilen auszuführen.

Die Erfindung wird anhand der beigefügten Figuren näher erläutert. Hierbei zeigen:
- Fig. 1: eine schematische Darstellung eines Systems zum Generieren eines Steuerprogramms für ein Automatisierungssystem gemäß einer Ausführungsform;
- Fig. 2: eine weitere schematische Darstellung eines Systems zum Generieren eines Steuerprogramms für ein Automatisierungssystem gemäß einer weiteren Ausführungsform;
- Fig. 3: ein Flussdiagramm eines Verfahrens zum Generieren eines Steuerprogramms für ein Automatisierungssystem gemäß einer Ausführungsform;
- Fig. 4: ein weiteres Flussdiagramm des Verfahrens zum Generieren eines Steuerprogramms für ein Automatisierungssystem gemäß einer weiteren Ausführungsform;
- Fig. 5: ein weiteres Flussdiagramm des Verfahrens zum Generieren eines Steuerprogramms für ein Automatisierungssystem gemäß einer weiteren Ausführungsform; und
- Fig. 6: ein weiteres Flussdiagramm des Verfahrens zum Generieren eines Steuerprogramms für ein Automatisierungssystem gemäß einer weiteren Ausführungsform.

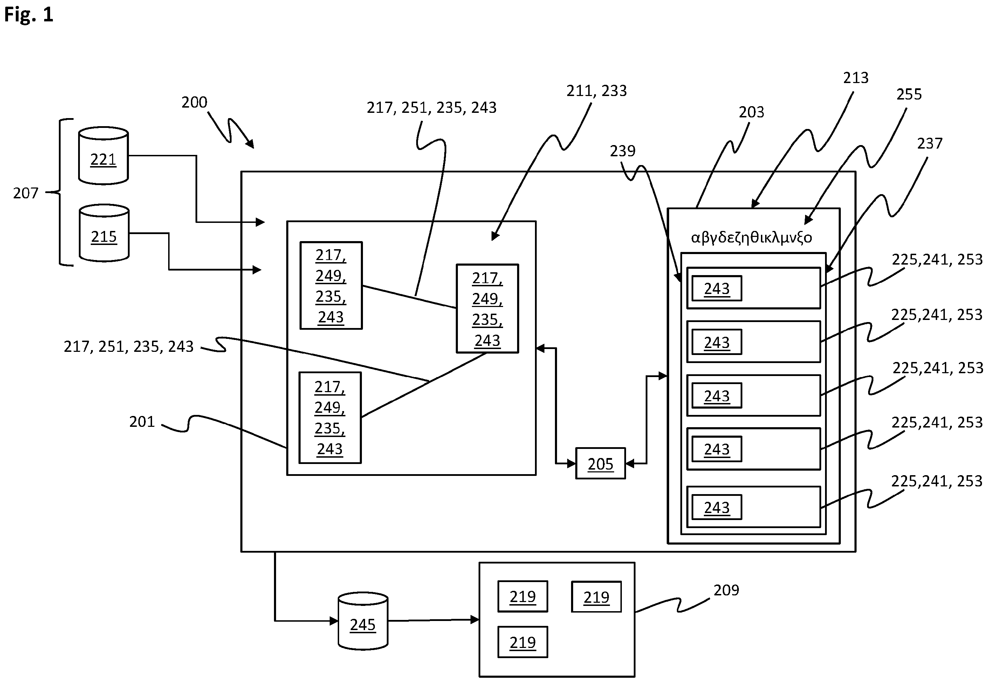

Fig. 1 zeigt eine schematische Darstellung eines Systems zum Generieren eines Steuerprogramms 209 für ein Automatisierungssystem gemäß einer Ausführungsform.

Erfindungsgemäß umfasst eine zum Ausführen des erfindungsgemäßen Verfahrens zum Generieren eines Steuerprogramms für ein Automatisierungssystem geeignete Entwicklungsumgebung 200 eine grafische Editoreinheit 201, eine textuelle Editoreinheit 203 und ein Übersetzungsmodul 205.

Die grafische Editoreinheit 201 ist darauf ausgelegt, einen grafischen Programmiervorgang gemäß einer aus dem Stand der Technik bekannten grafischen Programmiersprache zu bewirken. Die grafische Editoreinheit 201 kann dabei über alle aus dem Stand der Technik bekannten Eingabevorrichtungen und Anzeigevorrichtungen verfügen, die zur Ausführung eines grafischen Programmiervorgangs benötigt werden.

Die textuelle Editoreinheit 203 ist ausgelegt für einen textuellen Programmiervorgang. Hierzu kann die textuelle Editoreinheit 203 alle aus dem Stand der Technik bekannten Anzeigevorrichtungen und Eingabevorrichtungen umfassen, die zur Ausführung eines textuellen Programmiervorgangs benötigt werden.

Das Übersetzungsmodul 205 ist erfindungsgemäß eingerichtet, einen Übersetzungsvorgang zwischen den in der grafischen Editoreinheit 201 angezeigten beziehungsweise generierten grafischen Diagramme 211 einer vordefinierten grafischen Programmiersprache in entsprechende textuelle Zwischenrepräsentationen 213 zu übersetzen. Darüber hinaus ist das Übersetzungsmodul 205 eingerichtet, eine entgegengesetzt gerichtete Übersetzung auszuführen, in der entsprechend in der textuellen Editoreinheit 203 angezeigte beziehungsweise erzeugte textuelle Zwischenrepräsentationen 213 in entsprechende grafische Diagramme 211 einer zuvor ausgewählten grafischen Programmiersprache übersetzt werden.

Gemäß einer Ausführungsform umfassen die durch das erfindungsgemäße Verfahren beziehungsweise die erfindungsgemäße Entwicklungsumgebung 200 berücksichtigten grafischen Programmiersprachen die Sprachen Kontaktplan, Funktionsbausteinsprache und Ablaufsprache, die jeweils in der Norm IEC 61131-3 für die Automatisierungstechnik vordefiniert sind.

Das Übersetzungsmodul 205 ist entsprechend in der Lage, die genannten Programmiersprachen in textuellen Zwischenrepräsentationen 213 zu überführen.

Erfindungsgemäß sind die textuellen Zwischenrepräsentationen 213 in einer für den Nutzer lesbaren Form abgefasst. Die textuellen Zwischenrepräsentationen 213 sind hierzu in einer bekannten und lesbaren Form abgefasst, die natürlichen Sprachen, wie beispielsweise Englisch, Deutsch, Spanisch, Mandarin oder einer ähnlichen gängigen Weltsprache, angelehnt ist.

Die verwendeten Buchstaben, Begriffe oder Zeichen/Sonderzeichen sind hierbei den genannten natürlichen Sprachen entnommen. Darüber hinaus sind die textuellen Zwischenrepräsentationen 213 in Zeilenform dargestellt und ermöglichen eine Lesbarkeit innerhalb eines Anzeigefelds der textuellen Editoreinheit 203 von links oben nach rechts unten, oder folgt einer anderen anerkannten Konvention der Lesbarkeit.

Neben den gezeigten Komponenten kann die Entwicklungsumgebung 200 zusätzliche Komponenten umfassen, die für einen Kompiliervorgang beziehungsweise einen Programmiervorgang eines Steuerprogramms benötigt werden, die aus Übersichtlichkeitsgründen in der vorliegenden Darstellung jedoch nicht dargestellt sind. Diese können Eingabe- beziehungsweise Ausgabeschnittstellen, einen Compiler, ein Debuggingmodul und weitere zur Programmierung aus dem Stand der Technik bekannte Komponenten umfassen.

Zur Ausführung des Verfahrens zum Generieren eines Steuerprogramms für ein Automatisierungssystem werden durch die Entwicklungsumgebung 200 zunächst Eingabedaten 207 für ein Steuerprogramm 209 empfangen. Die Eingabedaten 207 umfassen hierbei Beschreibungen des grafischen Diagramms 211 einer zuvor ausgewählten grafischen Programmiersprache.

Basierend auf den Eingabedaten 207 wird darauffolgend durch die grafische Editoreinheit 201 ein den Eingabedaten 207 entsprechendes grafisches Diagramm 211 erzeugt und in der grafischen Editoreinheit 201 angezeigt. Die grafische Editoreinheit 201 umfasst hierzu eine entsprechende Anzeigeeinheit.

Sind die Eingabedaten 207 in textueller Form, so werden die Eingabedaten 207 vor dem Anzeigen in der grafischen Editoreinheit 201 durch das Übersetzungsmodul 205 zunächst in ein grafisches Diagramm 211 übersetzt.

In dem in Fig. 1 gezeigten Beispiel umfasst das grafische Diagramm 211 fünf grafische Programmobjekte 217. Die fünf grafischen Programmobjekte 217 umfassen hierbei drei Knotenobjekte 249, die jeweils über zwei Kantenobjekte 251 miteinander verbunden sind.

Die grafischen Programmobjekte 217 stellen grafische Darstellungen von Programmobjekten 219 des Steuerprogramms 209 dar.

Das hier dargestellte grafische Diagramm 211 ist lediglich beispielhaft für mögliche grafische Diagramme 211 der Programmiersprachen Kontaktplan, Funktionsbausteinsprache und Ablaufsprache.

In einem folgenden Übersetzungsschritt wird das in der grafischen Editoreinheit 201 angezeigte grafische Diagramm 211 durch das Übersetzungsmodul 205 in eine entsprechende textuelle Zwischenrepräsentation 213 übersetzt. Die textuelle Zwischenrepräsentation 213 wird darauffolgend in der textuellen Editoreinheit 203 dargestellt. Hierzu umfasst die textuelle Editoreinheit 203 eine entsprechende Anzeigevorrichtung.

In der textuellen Zwischenrepräsentation 213 sind für die fünf grafischen Programmobjekte 217 des grafischen Diagramms 211 entsprechend fünf textuelle Programmobjekte 225 der textuellen Zwischenrepräsentation 213 definiert. Die textuellen Programmobjekte 225 stellen hierbei textuelle Darstellungen beziehungsweise textuelle Beschreibungen der grafischen Programmobjekte 217 des grafischen Diagramms dar.

Die textuelle Zwischenrepräsentation 213 kann durch den Nutzer der Entwicklungsumgebung 200 in der textuellen Editoreinheit 203 eingesehen werden. Hierdurch können Fehler des grafischen Diagramms 211 detektiert und gegebenenfalls behoben werden.

Das Steuerprogramm 209 kann darauffolgend basierend auf dem grafischen Diagramm 211 und/oder basierend auf der textuellen Zwischenrepräsentation 213 erzeugt werden.

Gemäß einer Ausführungsform umfassen die Eingabedaten 207 Daten eine Programmdatei 221. In der Programmdatei 221 ist ein grafisches Diagramm 211 in textueller Form hinterlegt.

Durch Einlesen der Information der Programmdatei 221 durch die Entwicklungsumgebung 200 kann die grafische Editoreinheit 201 ein gemäß den Eingabedaten der Programmdatei 221 entsprechendes grafisches Diagramm 211 erzeugen und in der Editoreinheit 201 dem Nutzer anzeigen. Hierzu kann zunächst durch das Übersetzungsmodul 205 eine Übersetzung der in textueller Form in der Programmdatei 221 gespeicherten Information in ein entsprechendes grafisches Diagramm 211 erfolgen.

In der genannten Ausführungsform ist der Fall beschrieben, dass ein bereits bestehendes und in der Programmdatei 221 gespeichertes grafisches Diagramm 211 durch die Entwicklungsumgebung 200 geladen und in der grafischen Editoreinheit 201 zur weiteren Verarbeitung dem Nutzer angezeigt wird.

Gemäß einer weiteren Ausführungsform umfassen die Eingabedaten 207 grafische Eingabebefehle 215. Die grafischen Eingabebefehle 215 sind hierbei Programmierbefehle, die durch einen Nutzer der Entwicklungsumgebung 200 in einem grafischen Programmiervorgang an die grafische Editoreinheit 201 übermittelt werden. Die grafischen Eingabebefehle 215 können hierbei beispielsweise das Hinzufügen oder Entfernen von grafischen Programmobjekten 217 des grafischen Diagramms 211 umfassen. In der genannten Ausführungsform ist der Fall beschrieben, dass während eines grafischen Programmiervorgangs durch einen Nutzer der Entwicklungsumgebung 200 innerhalb der grafischen Editoreinheit 201 ein grafisches Diagramm 211 modifiziert oder ein grafisches Diagramm 211 vollständig neu generiert wird.

Die vorliegende Erfindung umfasst auch eine Kombination der beiden Ausführungsformen, in der beispielsweise zunächst durch Einlesen der Information der Programmdatei 221 ein bereits bestehendes und in der Programmdatei 221 in textueller Form abgespeichertes grafisches Diagramm 211 in die grafische Editoreinheit 201 hochgeladen und in dieser für die weitere Verarbeitung dem Nutzer angezeigt wird.

Durch Ausführen eines grafischen Programmiervorgangs, in dem der Nutzer grafische Eingabebefehle 215 in Form von Hinzufügen beziehungsweise Entfernen von grafischen Programmobjekten 217 zu dem oder von dem grafischen Diagramm 211 an die grafische Editoreinheit 201 übermittelt, wird das zuvor basierend auf den Informationen der Programmdatei 221 in die grafische Editoreinheit 201 geladene grafische Diagramm 211 modifiziert, beziehungsweise weiterentwickelt.

Gemäß einer Ausführungsform werden zur Übersetzung des grafischen Diagramms 211 in die textuelle Zwischenrepräsentation 213 zunächst die grafischen Programmobjekte 217 und ein grafisches Verhalten 233 des grafischen Diagramms 211 ermittelt. Das grafische Verhalten ist hierbei durch die Gesamtheit aller grafischen Programmobjekte 217 gegeben.

Das grafische Verhalten 233 beschreibt den Programmablauf des grafischen Diagramms 211. Das grafische Diagramm 211 ist hierbei eine grafische formale Beschreibung des Verhaltens des Programmcodes.

In der Übersetzung des grafischen Diagramms 211 in die textuelle Zwischenrepräsentation 213 wird eine Übersetzung wenigstens eines grafischen Programmobjekts 217 in wenigstens ein entsprechendes textuelles Programmobjekt 225 bewirkt. Das wenigstens eine textuelle Programmobjekt 225 stellt hierbei eine textuelle Darstellung des wenigstens einen grafischen Programmobjekts 217 dar und beschreibt das gleiche Programmobjekt 219 des Steuerprogramms 209 wie das entsprechende grafische Programmobjekt 217 des grafischen Diagramms 211.

Das grafische Verhalten kann durch Berücksichtigung von flüchtigen Repräsentationen des grafischen Diagramms 211 ermittelt werden. Wie aus dem Stand der Technik bekannt ist, werden in grafischen Programmiersprachen verfasste grafische Diagramme 211 in flüchtigen Repräsentationen dargestellt. Die flüchtigen Repräsentationen werden nicht im Speicher bleibend gespeichert sondern existieren ausschließlich während der Erstellung beziehungsweise Darstellung der grafischen Diagramme in der grafischen Editoreinheit 201 im Arbeitsspeicher des die Entwicklungsumgebung 200 ausführenden Computers.

Die flüchtigen Repräsentationen liegen während eines Bearbeitens des grafischen Diagramms 211 in der Entwicklungsumgebung 200 im RAM des die Entwicklungsumgebung 200 ausführenden Computers als Bit-Folgen vor und stellen die einzelnen Komponenten, inklusive der grafischen Programmobjekte 217 des grafischen Verhaltens des grafischen Diagramms 211 dar.

Durch Einlesen der flüchtigen Repräsentationen durch die Entwicklungsumgebung 200 können die grafischen Programmobjekte 217 und das grafische Verhalten identifiziert werden. Durch Einlesen können ferner die Positionsinformationen und Größeninformationen des grafischen Diagramms 211 und der darin enthaltenen grafischen Programmobjekte 217 ermittelt werden. Die Positions- und Größeninformationen beschreiben die Positionen und Größen, an und mit denen die einzelnen Komponenten, sprich die grafischen Programmobjekte 217, in der grafischen Editoreinheit 201 angezeigt werden.

Unter Berücksichtigung der flüchtigen Repräsentationen des grafischen Diagramms 211 kann die entsprechende textuelle Zwischenrepräsentation 213, inklusive der textuellen Programmobjekte 225 und des textuellen Verhaltens 237, aus dem grafischen Diagramm 211 übersetzt werden.

Gemäß einer Ausführungsform wird die Übersetzung des grafischen Diagramms 211 in die textuelle Zwischenrepräsentation 213 zeilenweise durchgeführt. Hierbei wird dem wenigstens einen grafischen Programmobjekt 217 ein entsprechendes textuelles Programmobjekt 225 zugeordnet. Das textuelle Programmobjekt 225 ist wenigstens durch eine textuelle Zeile 241 der textuellen Zwischenrepräsentation 213 gegeben. Vorzugsweise sind die textuellen Programmobjekte 225 durch genau eine textuelle Zeile 241 innerhalb der textuellen Zwischenrepräsentation 213 dargestellt.

Die in Form der textuellen Zeilen 241 dargestellten textuellen Programmobjekte 225 können in der textuellen Zwischenrepräsentation 213 nach den jeweiligen in die textuellen Programmobjekte 225 integrierten Identitäten 243 der grafischen Programmobjekte 217 angeordnet werden.

Gemäß einer Ausführungsform werden zum Übersetzen des grafischen Diagramms 211 in die textuelle Zwischenrepräsentation 213 Identitäten 243 der grafischen Programmobjekte 217 ermittelt. Mittels der Identitäten 243 ist eine eindeutige Identifikation der einzelnen grafischen Programmobjekte 217 ermöglicht. Während des zeilenweisen Übersetzens des grafischen Diagramms 211 in die textuelle Zwischenrepräsentation 213 werden die Identitäten 243 der grafischen Programmobjekte 217 in die entsprechenden textuellen Programmobjekte 225 integriert.

Die Identitäten 243 können hierbei beispielsweise als Ziffern- oder Buchstabenfolgen ausgebildet sein, mittels denen eine eindeutige Identifizierung der grafischen Programmobjekte 217 beziehungsweise der textuellen Programmobjekte 225 ermöglicht ist.

Ferner können während des Übersetzens grafische Objektpositionen 235 der grafischen Programmobjekte 217 innerhalb des grafischen Diagramms 211 ermittelt werden. Die grafischen Objektpositionen 235 weisen den jeweiligen grafischen Programmobjekten 217 Positionen innerhalb des grafischen Verhaltens zu und ordnen die grafischen Programmobjekte 217 einander zu. Über die grafischen Objektpositionen 235 kann entsprechend eine Ausführungsreihenfolge der grafischen Programmobjekte 217 innerhalb eines Programmablaufs des grafischen Diagramms 211 definiert werden.

Im Übersetzungsprozess können die den grafischen Programmobjekten 217 zugeordneten grafischen Objektpositionen 235 in entsprechende textuelle Objektpositionen 253 umgewandelt und den jeweiligen textuellen Programmobjekten 225 zugeordnet werden. Über die textuellen Objektpositionen 253 können die textuellen Programmobjekte 225 einander zugeordnet werden und es kann ein entsprechender Ausführungsablauf der textuellen Programmobjekte 225 definiert werden. Hierüber kann ein entsprechender Programmablauf des textuellen Verhaltens definiert werden.

In den textuellen Programmobjekten 225 ist somit eine eindeutige textuelle Beschreibung der jeweiligen grafischen Programmobjekte 217 bewirkt. Die textuelle Beschreibung kann Informationen bezüglich der Art des jeweiligen grafischen Programmobjekts 217, Informationen bezüglich Verknüpfungen des jeweiligen grafischen Programmobjekts 217 mit weiteren grafischen Programmobjekten 217, die Identitäten 243 und weitere relevante Informationen umfassen.

Beispielsweise können in den textuellen Programmobjekten 225 Positionsinformationen der grafischen Programmobjekte 217 integriert sein. Die Positionsinformationen beschreiben hierbei Positionsinformationen bezüglich einer Positionierung der jeweiligen grafischen Programmobjekte 217 des grafischen Diagramms 211 innerhalb der Anzeigevorrichtung der grafischen Editoreinheit 201. Die Positionsinformationen können beispielsweise x- und y-Koordinaten umfassen.

Neben den Positionsinformationen können Größeninformationen umfasst sein, die ebenfalls über die x- und y-Koordinaten eine Größe des jeweiligen grafischen Programmobjekts 217 innerhalb der Anzeigevorrichtung der grafischen Editoreinheit 201 definieren.

Neben der Art des jeweiligen grafischen Programmobjekts 217 können in den entsprechenden textuellen Programmobjekten 225 ferner Funktionsweisen beziehungsweise Funktionseinschränkungen der jeweiligen grafischen Programmobjekte 217 umfasst sein. Die Arten beziehungsweise Funktionsweisen der grafischen Programmobjekte 217 sind hierbei durch die oben genannte Norm IEC 61131-3 definiert.

Die Positions- beziehungsweise Größeninformationen, die ausschließlich die grafische Darstellung der grafischen Programmobjekte 217 in der grafischen Editoreinheit 201 betreffen, können beispielsweise herstellerspezifisch individuell definiert sein.

Neben den textuellen Programmobjekten 225 des textuellen Verhaltens 237 umfasst die textuelle Zwischenrepräsentation 213 textuelle Zusatzinformationen 255. Die textuellen Zusatzinformationen 255 können beispielsweise Datentypen, Variablentypen, Schnittstellen oder andere Informationen umfassen.

Die textuellen Zusatzinformationen können hierbei in einer durch die Norm IEC 61131-3 vordefinierten Grundsprache abgefasst sein. Die Grundsprache beschreibt hierbei die durch die Norm festgelegte Form, in der die zusätzliche Information abgefasst sein muss.

Das textuelle Verhalten 237 ist in der gezeigten Ausführungsform in den Text der textuellen Zusatzinformation 255 an der vordefinierten Verhaltensposition 239 eingebettet. Die Verhaltensposition 239 definiert hierbei die Position in der textuellen Zwischenrepräsentation 213, an der das textuelle Verhalten 237 anzuordnen ist.

Die Grundsprache der textuellen Zusatzinformation 255 kann hierbei an bekannte natürliche Sprachen angelegt und in einer für den Nutzer lesbaren Form abgefasst sein.

Gemäß einer Ausführungsform kann die entsprechend generierte textuelle Zwischenrepräsentation 213 in einer Darstellungsdatei 245 gespeichert werden.

Erfindungsgemäß wird nach Erzeugung der textuellen Zwischenrepräsentation 213 und der Anzeige der textuellen Zwischenrepräsentation 213 in der textuellen Editoreinheit 203 basierend auf dem grafischen Diagramm 211 und/oder basierend auf der textuellen Zwischenrepräsentation 213 das durch das grafische Diagramm 211 und/oder die textuelle Zwischenrepräsentation 213 dargestellte Steuerprogramm 209 erzeugt.

Ferner kann gemäß einer Ausführungsform zunächst ein Debuggingvorgang basierend auf der textuellen Zwischenrepräsentation 213 ausgeführt werden. Hierzu kann die Entwicklungsumgebung 200 eine zum Ausführen eines Debuggingvorgangs eingerichtete Komponente, beispielsweise in Form eines Debuggers, umfassen.

Gemäß einer Ausführungsform wird bei der Erzeugung des Steuerprogramms 209 das Steuerprogramm 209 in einer Binärdarstellung erzeugt. Die Binärdarstellung kann wiederum in der Darstellungsdatei 245 gespeichert sein.

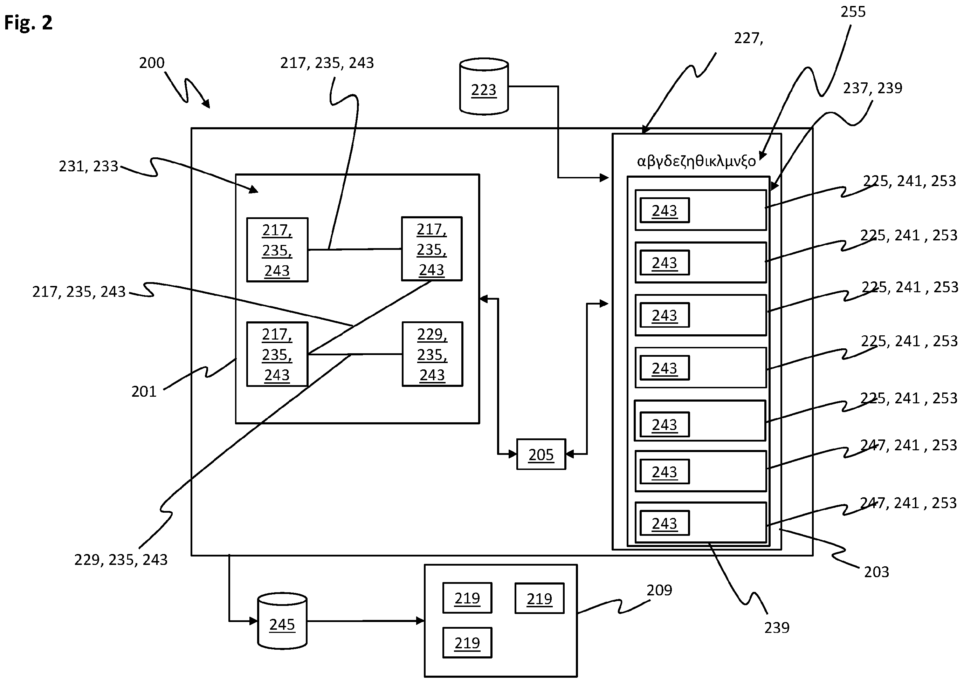

Fig. 2 zeigt eine weitere schematische Darstellung eines Systems zum Generieren eines Steuerprogramms 209 für ein Automatisierungssystem gemäß einer weiteren Ausführungsform.

Die Ausführungsform in Fig. 2 basiert auf der Ausführungsform in Fig. 1 und umfasst alle dort beschriebenen Merkmale. Sofern diese in der Ausführungsform in Fig. 2 unverändert bleiben, wird von einer erneuten detaillierten Beschreibung abgesehen.

In der gezeigten Ausführungsform ist die Entwicklungsumgebung 200 in der Lage, dem Nutzer die Möglichkeit eines textuellen Programmiervorgangs bereitzustellen. Der textuelle Programmiervorgang wird hierbei auf der textuellen Zwischenrepräsentation 213 durchgeführt. Durch den textuellen Programmiervorgang kann der Nutzer somit die textuelle Zwischenrepräsentation 213 der Fig. 1, beispielsweise durch das Hinzufügen oder Entfernen von textuellen Programmobjekten 225 zu oder von der textuellen Zwischenrepräsentation 213, die textuelle Zwischenrepräsentation 213 modifizieren und eine modifizierte textuelle Zwischenrepräsentation 227 erzeugen.

Hierzu werden durch die textuelle Editoreinheit 203 entsprechende textuelle Eingabebefehle 223 empfangen. Die textuellen Eingabebefehle 223 beschreiben hierbei die während des textuellen Programmiervorgangs durch den Nutzer eingegebene Programmierbefehle, durch die textuelle Programmobjekte 225 hinzugefügt oder entfernt bzw. geändert werden.

Das Ändern von textuellen Programmobjekten 225 kann hierbei das Entfernen des zu ändernden textuellen Programmobjekts und das entsprechende Hinzufügen des jeweils geänderten textuellen Programmobjekts umfassen. Die textuellen Eingabebefehle 223 können individuell von der zur Darstellung der textuellen Zwischenrepräsentationen 213, 227 beziehungsweise der textuellen Programmobjekte 225 verwendeten Sprache und von den jeweiligen individuellen textuellen Beschreibungen der grafischen Programmobjekte 217 in den textuellen Programmobjekten 225 abhängen.

Die Syntax der textuellen Zwischenrepräsentation 213, 227 kann hierbei wenigstens teilweise der Syntax der grafischen Programmiersprache entsprechen, die in der oben genannten Norm IEC 61131-3 vordefiniert ist.

In der gezeigten Ausführungsform umfassen die auf den textuellen Eingabebefehlen 223 des Nutzers basierenden Modifikationen der textuellen Zwischenrepräsentation 213 der Fig. 1 das Hinzufügen von zwei weiteren textuellen Programmobjekten 247. Die zwei weiteren textuellen Programmobjekte 247 sind gemäß den ursprünglichen textuellen Programmobjekten 225 durch textuelle Zeilen 241 gemäß den oben beschriebenen Eigenschaften textuell dargestellt.

Durch Ausführen eines Übersetzungsprozesses durch das Übersetzungsmodul 205 wird aus der modifizierten textuellen Zwischenrepräsentation 227 ein entsprechend modifiziertes grafisches Diagramm 231 erzeugt. In dem modifizierten grafischen Diagramm 231 sind der modifizierten textuellen Zwischenrepräsentation 227 entsprechend zwei weitere grafische Programmobjekte 229 integriert. In der gezeigten Ausführungsform sind die zwei weiteren grafischen Programmobjekte 229 mit den grafischen Programmobjekten 217 zu einem zusammenhängenden grafischen Diagramm verbunden.

In der gezeigten Ausführungsform ist der Nutzer somit in der Lage, durch Ausführung eines entsprechenden textuellen Programmiervorgangs, ein zuvor erzeugtes grafisches Diagramm 211 zu modifizieren. Der Nutzer ist somit in der Lage, das Steuerprogramm 209 basierend auf der zuvor ausgewählten grafischen Programmiersprache sowohl durch Ausführung eines grafischen Programmiervorgangs, wie dies zur Fig. 1 beschrieben ist, als auch in Ausführung eines textuell basierten Programmiervorgangs, wie dies zu Fig. 2 beschrieben ist, zu erzeugen.

Der Nutzer kann so nach Belieben die für sich handlichste Programmierart auswählen und kann auch während des Programmierens zwischen den verschiedenen textuellen beziehungsweise grafischen Programmiervorgängen wechseln. Die während des einen Programmiervorgangs ausgeführten Änderungen werden durch die Übersetzung unmittelbar in der jeweils anderen Darstellung angezeigt. Die im grafischen Diagramm 211 vorgenommenen Änderungen werden durch Übersetzung unmittelbar in der textuellen Zwischenrepräsentation 213, 227 angezeigt. Analog werden die in der textuellen Zwischenrepräsentation 213, 227 vorgenommenen Änderungen unmittelbar nach Übersetzung in den grafischen Diagrammen 211, 231 angezeigt.

Im grafischen Diagramm 211 neu hinzugefügte oder gelöschte grafische Programmobjekte 217 werden entsprechend als neu hinzugefügte oder gelöschte textuelle Programmobjekte 225 in der textuellen Zwischenrepräsentation 213 angezeigt beziehungsweise in diese integriert oder von dieser gelöscht.

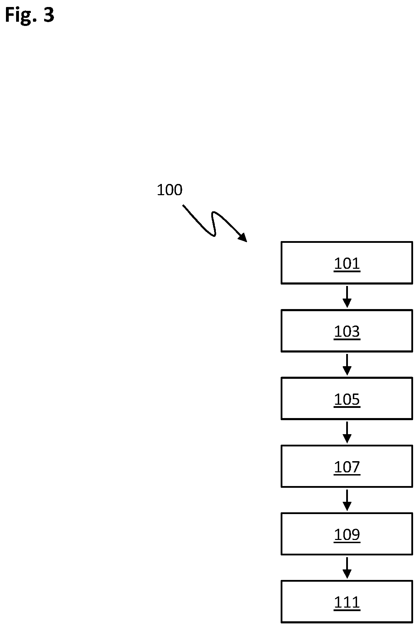

Fig. 3 zeigt ein Flussdiagramm eines Verfahrens 100 zum Generieren eines Steuerprogramms 209 für ein Automatisierungssystem gemäß einer Ausführungsform.

Zum Generieren eines Steuerprogramms für ein Automatisierungssystem werden in einem Empfangsschritt 101 zunächst Eingabedaten 207 für ein Steuerprogramm 209 des Automatisierungssystems durch eine Entwicklungsumgebung 200 empfangen. Die Eingabedaten 207 beschreiben hierbei ein grafisches Diagramm 211 einer grafischen Programmiersprache. Das grafische Diagramm bildet seinerseits wenigstens einen Teil des zu programmierenden Steuerprogramms 209 gemäß der grafischen Programmiersprache grafisch ab.

Gemäß einer Ausführungsform kann die grafische Programmiersprache die Programmiersprache eine der in der Norm IEC 61131-3 definierten Programmiersprachen Kontaktplan, Funktionsbausteinsprache oder Ablaufsprache sein.

In einem ersten Erzeugungsschritt 103 wird darauffolgend basierend auf den Eingabedaten 207 durch eine grafische Editoreinheit 201 der Entwicklungsumgebung 200 ein entsprechendes grafisches Diagramm 211 erzeugt.

In einem ersten Anzeigeschritt 105 wird das grafische Diagramm 211 in der grafischen Editoreinheit 201 angezeigt.

Darauffolgend wird in einem ersten Übersetzungsschritt 107 das grafische Diagramm 211 der grafischen Programmiersprache durch ein Übersetzungsmodul 205 der Entwicklungsumgebung 200 in eine textuelle Zwischenrepräsentation 213 des grafischen Diagramms 211 übersetzt. Die textuelle Zwischenrepräsentation 213 stellt hierbei eine textuelle Beschreibung des grafischen Diagramms 211 dar.

Die textuelle Beschreibung der textuellen Zwischenrepräsentation 213 ist derart ausgebildet, dass eine Lesbarkeit der textuellen Zwischenrepräsentation 213 durch einen Nutzer der Entwicklungsumgebung 200 gewährleistet ist. Die textuelle Zwischenrepräsentation 213 umfasst somit in textueller und durch den Nutzer problemlos lesbarer Form die vollständige Information des grafischen Diagramms 211.

Darauffolgend wird in einem zweiten Anzeigeschritt 109 die durch Übersetzung des grafischen Diagramms 211 erzeugte textuelle Zwischenrepräsentation 213 in einer textuellen Editoreinheit 203 der Entwicklungsumgebung 200 angezeigt. Der Nutzer kann somit durch Inspektion der ihm angezeigten textuellen Zwischenrepräsentation 213 die Funktionsweise beziehungsweise Fehlerfreiheit des entsprechenden grafischen Diagramms 211 überprüfen.

Abschließend wird in einem zweiten Erzeugungsschritt 111 das Steuerprogramm 209 basierend auf der textuellen Zwischenrepräsentation 213 und/oder basierend auf dem grafischen Diagramm 211 erzeugt.

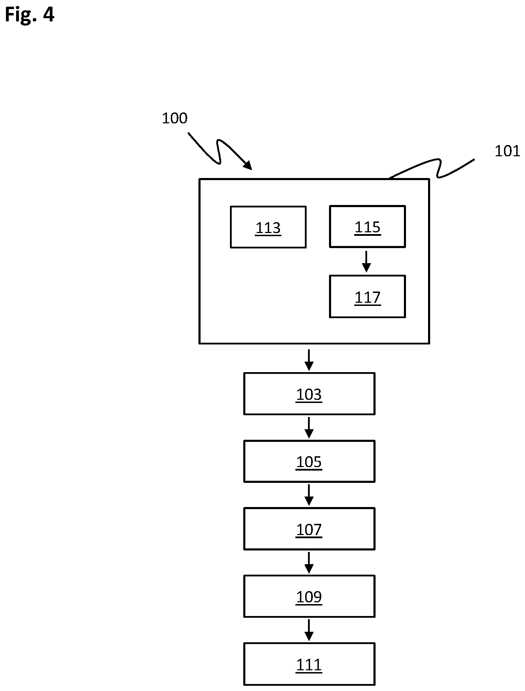

Fig. 4 zeigt ein weiteres Flussdiagramm des Verfahrens 100 zum Generieren eines Steuerprogramms 209 für ein Automatisierungssystem gemäß einer weiteren Ausführungsform.

Die Ausführungsform in Fig. 4 basiert auf der Ausführungsform in Fig. 3 und umfasst alle dort beschriebenen Verfahrensschritte. Sofern diese unverändert bleiben, wird von einer erneuten detaillierten Beschreibung abgesehen.

In der gezeigten Ausführungsform werden zwei Fälle zum Bereitstellen der Eingabedaten 207 zum Erzeugen des grafischen Diagramms 211 beschrieben.

In einem Fall wird in einem Leseschritt 115 eine Programmdatei 221 durch die Entwicklungsumgebung 200 eingelesen. In der Programmdatei 221 ist in textueller Form eine Beschreibung des grafischen Diagramms 211 hinterlegt. Die Eingabedaten 207 entsprechen hierbei den textuellen Informationen der Programmdatei 221.

In einem zweiten Übersetzungsschritt 117 werden die textuellen Informationen der Programmdatei 221 durch das Übersetzungsmodul 205 in das grafische Diagramm 211 übersetzt.

Hierdurch ist der Fall beschrieben, dass zum Erzeugen des grafischen Diagramms 211 basierend auf den Eingabedaten 207 ein bereits zuvor erzeugtes und in textueller Form in der Programmdatei 221 zwischengespeichertes grafisches Diagramm 211 durch Einlesen der Information der Programmdatei 221 durch die Entwicklungsumgebung 200 erzeugt wird. Beim Einlesen der Programmdatei 221 wird die in textueller Form in der Programmdatei 221 gespeicherte Information zunächst enttextualisert und entsprechend in ein grafisches Diagramm 211 umgewandelt, das in der grafischen Editoreinheit 201 angezeigt werden kann.

Hiermit ist der Fall umfasst, dass ein zu einem früheren Zeitpunkt bereits erzeugtes grafisches Diagramm 211 in die Entwicklungsumgebung 200 geladen wird, um darauffolgend durch Ausführen entsprechender Programmiervorgänge weiter bearbeitet beziehungsweise modifiziert zu werden.

In dem zweiten Fall werden in einem grafischen Programmierschritt 113 zunächst grafische Eingabefehle 215 eines Nutzers der Entwicklungsumgebung 200 durch die grafische Editoreinheit 201 empfangen. Die Eingabedaten 207 umfassen hierbei die grafischen Eingabebefehle 215. Die grafischen Eingabebefehle 215 umfassen wiederum Programmierbefehle zum Hinzufügen und/oder Entfernen und/oder Ändern von grafischen Programmobjekten 217. Die grafischen Programmobjekte 217 sind hierbei Teilelemente des grafischen Diagramms 211 und repräsentieren Programmobjekte 219 des zu generierenden Steuerprogramms 209.

Hierdurch wird der Fall eines grafischen Programmiervorgangs beschrieben. Die grafischen Eingabebefehle 215 entsprechen hierbei Programmierhandlungen, die während des Programmierens gemäß der grafischen Programmiersprache durch den Nutzer eingegeben werden.

Durch den grafischen Programmiervorgang kann ein bereits bestehendes und in der grafischen Editoreinheit 201 angezeigtes grafisches Diagramm 211 durch Hinzufügen beziehungsweise Entfernen von grafischen Programmobjekten 217 modifiziert werden. Alternativ kann durch Ausführen des grafischen Programmiervorgangs ein vollständig neues grafisches Diagramm 211 erzeugt werden.

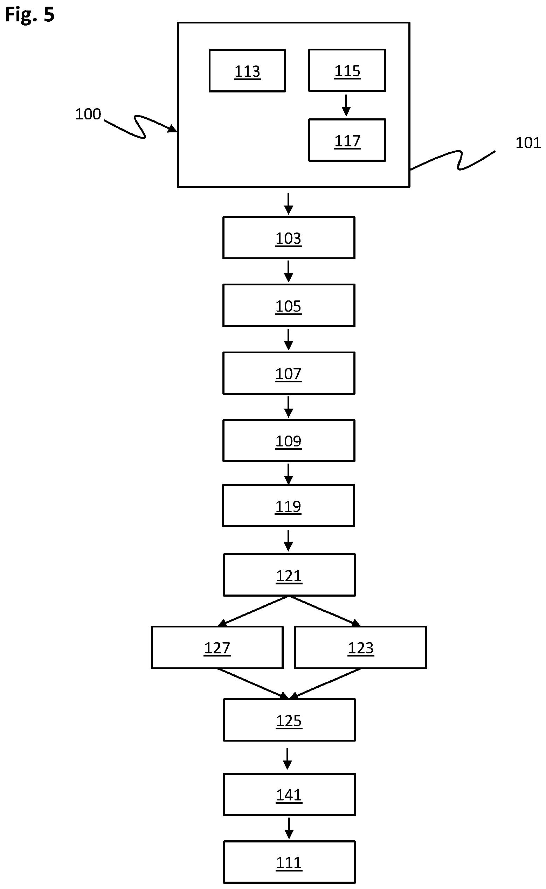

Fig. 5 zeigt ein weiteres Flussdiagramm des Verfahrens 100 zum Generieren eines Steuerprogramms 209 für ein Automatisierungssystem gemäß einer weiteren Ausführungsform.

Die in Fig. 5 gezeigte Ausführungsform basiert auf der Ausführungsform in Fig. 4 und umfasst alle dort beschriebenen Verfahrensschritte. Sollten diese in der gezeigten Ausführungsform unverändert bleiben, wird von einer erneuten detaillierten Beschreibung abgesehen.

In der gezeigten Ausführungsform werden in einem textuellen Programmierschritt 119 durch die textuelle Editoreinheit 203 der Entwicklungsumgebung 200 zunächst textuelle Eingabebefehle 223 des Nutzers empfangen. Durch die textuellen Eingabebefehle 223 werden textuelle Programmobjekte 225 als textuelle Repräsentationen von entsprechenden grafischen Programmobjekten 217 des grafischen Diagramms 211 zu der textuellen Zwischenrepräsentation 213 hinzugefügt oder von dieser entfernt. Die textuellen Programmobjekte 225 sind hierbei textuelle Repräsentationen der grafischen Programmobjekte 217 des grafischen Diagramms 211.

In einem dritten Erzeugungsschritt 121 wird basierend auf den textuellen Eingabebefehlen 223 und der textuellen Zwischenrepräsentation 213 eine modifizierte textuelle Zwischenrepräsentation 227 erzeugt.

In einem dritten Übersetzungsschritt 123 wird darauffolgend die modifizierte textuelle Zwischenrepräsentation 227 in ein entsprechend modifiziertes grafisches Diagramm 231 übersetzt. Alternativ oder zusätzlich können die durch die textuellen Eingabebefehle bewirkten textuellen Modifikationen der textuellen Zwischenrepräsentation 213 in grafische Modifikationen des grafischen Diagramms 211 übersetzt werden.

Die textuellen Modifikationen umfassen hierbei wenigstens ein neu zu der textuellen Zwischenrepräsentation 213 hinzugefügtes oder aus der textuellen Zwischenrepräsentation 213 gelöschtes textuelles Programmobjekt 225. Die aus den textuellen Modifikationen übersetzten grafischen Modifikationen umfassen entsprechend wenigstens ein neu zum grafischen Diagramm 211 hinzugefügtes oder vom grafischen Diagramm 211 gelöschtes grafisches Programmobjekt 217.

In einem vierten Anzeigeschritt 127 wird die modifizierte textuelle Zwischenrepräsentation 227 des modifizierten grafischen Diagramms 231 in der textuellen Editoreinheit 203 angezeigt.

In einem dritten Anzeigeschritt 125 wird das modifizierte grafische Diagramm 231 anstelle des grafischen Diagramms 211 in der grafischen Editoreinheit 201 angezeigt.

Alternativ oder zusätzlich werden im grafischen Diagramm 211 die grafischen Modifikationen angezeigt. Hierzu wird das grafische Diagramm 211 in der grafischen Editoreinheit 210 gemäß den Modifikationen modifiziert, indem zum grafischen Diagramm 211 das wenigstens eine neu hinzugefügte grafische Programmobjekt 217 der grafischen Modifikationen in das bestehende grafische Diagramm 211 eingefügt wird.

Das neu hinzugefügte grafische Programmobjekt 217 kann als ein neues grafisches Programmobjekt 217 entsprechend gekennzeichnet sein, beispielsweise farblich.

Entsprechend kann das gemäß den grafischen Modifikationen vom grafischen Diagramm 211 gelöschte grafische Programmobjekt 217 entsprechend gekennzeichnet sein, gegebenenfalls ebenfalls farblich. Alternativ kann das gelöschte grafische Programmobjekt 217 im grafischen Diagramm 211 auch nicht mehr angezeigt werden.

Ferner werden in einem Zusammenfassungsschritt 141 die textuellen Zwischenrepräsentation 213 des grafischen Diagramms (211) und wenigstens eine weitere Zwischenrepräsentation wenigstens eines weiteren grafischen Diagramms zu einer textuellen Gesamtzwischenrepräsentation zusammengefasst. In der Gesamtzwischenrepräsentation ist damit eine Mehrzahl von verschiedenen textuellen Zwischenrepräsentationen 213 einer Mehrzahl verschiedener grafischer Diagramme 211 zu einem zusammenhängenden Code in textueller Form zusammengefasst.

Die textuellen Verhalten der mehreren textuellen Zwischenrepräsentationen 213 sind hierbei in der textuellen Gesamtzwischenrepräsentation an den entsprechenden Verhaltenspositionen angeordnet.

Zwischen den textuellen Verhalten 237 der verschiedenen grafischen Diagramme sind in der textuellen Gesamtzwischenrepräsentation die textuellen Zusatzinformationen 255 angeordnet. Wie oben beschrieben, können die textuellen Zusatzinformationen 255 beispielsweise Datentypen, Variablentypen, Schnittstellen oder andere Informationen umfassen. Die textuellen Zusatzinformationen, die in der Gesamtzwischenrepräsentation zwischen den Verhalten der verschiedenen grafischen Diagramme angeordnet sind, können hierbei in einer durch die Norm IEC 61131-3 vordefinierten Grundsprache abgefasst sein.

Die Grundsprache beschreibt hierbei die durch die Norm festgelegte Form, in der die zusätzliche Information abgefasst sein muss.

Die Verhalten der verschiedenen grafischen Diagramme sind hingegen in einer textuellen Untersprache mit einer Syntax verfasst, die der grafischen Struktur der durch die Norm IEC 61131-3 definierten Programmiersprachen Kontaktplan, Funktionsbausteinsprache oder Ablaufsprache entspricht.

Die Untersprache stellt hierbei die genannten grafischen Programmiersprachen textuell dar und ist in einer für den Nutzer lesbaren Form gestaltet.

In der textuellen Gesamtzwischenrepräsentation stellt die Grundsprache den Rahmen des zusammenhängenden Codes dar, während die Untersprachen textuellen Darstellungen der grafischen Diagramme, und insbesondere der Verhalten der grafischen Diagramme 211, sind.

Gemäß einer Ausführungsform kann auch die textuelle Zwischenrepräsentation 213, die nur ein grafisches Diagramm 211 repräsentiert, einen in der durch die Norm IEC 61131-3 vordefinierten textuellen Grundsprache verfassten Abschnitt umfassen, in denen die zusätzlichen Informationen, mit den Grundbedingungen wie Datentypen und/oder Variablentypen des das grafische Verhalten 233 repräsentierenden textuellen Verhaltens 237 bereitgestellt sind. Das entsprechende textuelle Verhalten 237 ist wie oben beschrieben in der entsprechenden einer der Programmiersprachen Kontaktplan, Funktionsbausteinsprache oder Ablaufsprach entsprechenden Untersprache verfasst.

In der gezeigten Ausführungsform wird das Steuerprogramm 209 im zweiten Erzeugungsschritt 111 basierend auf der modifizierten textuellen Zwischenrepräsentation 227 beziehungsweise basierend auf der textuellen Gesamtzwischenrepräsentation und/oder basierend auf dem modifizierten grafischen Diagramm 231 beziehungsweise der Mehrzahl von modifizierten grafischen Diagrammen 231 erzeugt.

In der gezeigten Ausführungsform wird der Fall beschrieben, dass durch Ausführen eines textuellen Programmiervorgangs durch den Nutzer basierend auf der textuellen Zwischenrepräsentation 213 eine Modifizierung der textuellen Zwischenrepräsentation 213 und darauf basierend eine Modifizierung des grafischen Diagramms 211 bewirkt wird.

Hierzu werden durch den Nutzer in Form der textuellen Eingabebefehle 223 textuelle Programmobjekte 225 aus der textuellen Zwischenrepräsentation 213 entfernt beziehungsweise weitere textuelle Programmobjekte 247 zu der textuellen Zwischenrepräsentation 213 hinzugefügt. Durch das Modifizieren der textuellen Zwischenrepräsentation 213 durch den Nutzer durch Ausführen des textuellen Programmiervorgangs kann nach Übersetzen der entsprechend durch Ausführen der Modifizierung erzeugten modifizierten textuellen Zwischenrepräsentation 227 ein entsprechend modifiziertes grafisches Diagramm 231 erzeugt werden.

Der Nutzer kann somit sowohl durch Ausführen eines grafischen Programmiervorgangs als auch durch Ausführen eines textuellen Programmiervorgangs die Programmierung des Steuerprogramms 209 basierend auf der grafischen Programmiersprache vorantreiben.

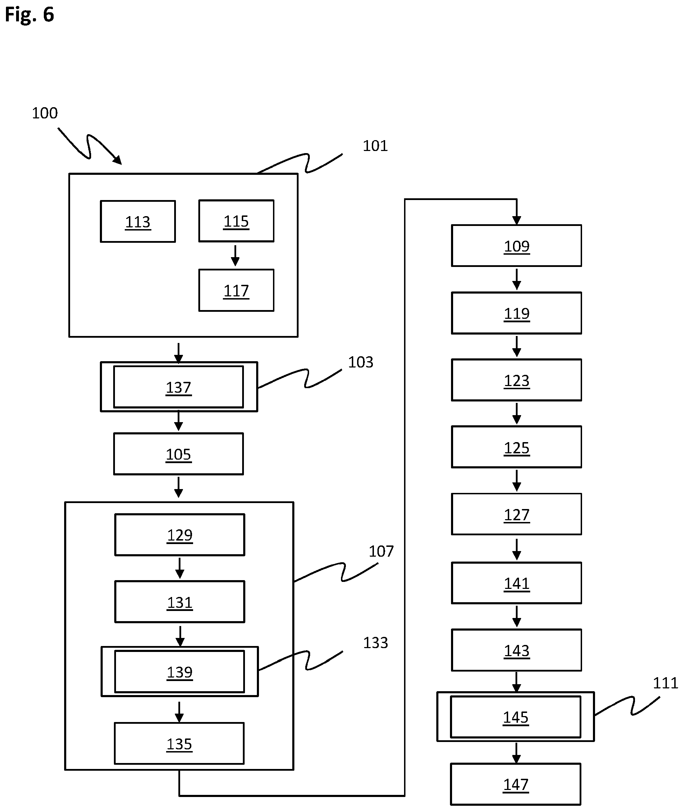

Fig. 6 zeigt ein weiteres Flussdiagramm des Verfahrens 100 zum Generieren eines Steuerprogramms 209 für ein Automatisierungssystem gemäß einer weiteren Ausführungsform.

Die Ausführungsform in Fig. 6 basiert auf der Ausführungsform in Fig. 5 und umfasst alle dort beschriebenen Verfahrensschritte. Sollten diese in der gezeigten Ausführungsform unverändert bleiben, wird von einer erneuten detaillierten Beschreibung abgesehen.

In der gezeigten Ausführungsform umfasst der erste Erzeugungsschritt 103 einen Identitätsermittlungsschritt 137. Im Identitätsermittlungsschritt 137 werden Identitäten 243 der grafischen Programmobjekte 217 des grafischen Diagramms 211 ermittelt. Die Identitäten 243 ermöglichen hierbei eine eindeutige Identifizierung der jeweiligen grafischen Programmobjekte 217.

Ferner umfasst der erste Übersetzungsschritt 107 einen Verhaltensermittlungsschritt 129. Im Verhaltensermittlungsschritt 129 werden die grafischen Programmobjekte 217 und ein grafisches Verhalten 233 des grafischen Diagramms 211 ermittelt.

Das grafische Verhalten 233 ist erfindungsgemäß eine grafische Repräsentation eines Programmablaufs des Steuerprogramms 209.

In einem Verhaltensübersetzungsschritt 131 werden darauffolgend die grafischen Programmobjekte 217 und das grafische Verhalten 233 in textuelle Programmobjekte 225 und ein textuelles Verhalten 237 der textuellen Zwischenrepräsentation 213 übersetzt. Das textuelle Verhalten 237 stellt hierbei eine textuelle Repräsentation des Programmablaufs des Steuerprogramms 209 dar.

In einem Zeilenübersetzungsschritt 133 wird darauffolgend eine zeilenweise Übersetzung des grafischen Diagramms 211 in die Zwischenrepräsentation 213 durchgeführt. In der zeilenweisen Übersetzung wird jedem grafischen Programmobjekt 217 wenigstens ein textuelles Programmobjekt 225 in Gestalt einer textuellen Zeile 241 der textuellen Zwischenrepräsentation 213 zugeordnet. Die textuellen Zeilen 241 stellen hierbei eine eindeutige Beschreibung der jeweiligen grafischen Programmobjekte 217 dar.

Hierbei werden in einem Integrationsschritt 139 die zuvor ermittelten Identitäten 243 der grafischen Programmobjekte 217 in die jeweiligen durch die textuellen Zeilen 241 dargestellten textuellen Programmobjekte 225 integriert.

In einem Anordnungsschritt 135 wird das textuelle Verhalten 237 darauffolgend innerhalb der textuellen Zwischenrepräsentation 213 an der Verhaltensposition 239 angeordnet. Die Verhaltensposition 239 definiert hierbei die Anordnung des textuellen Verhaltens 237 innerhalb der textuellen Zwischenrepräsentation 213.

Die einzelnen als textuelle Zeilen 241 dargestellten textuellen Programmobjekte 225 können hierbei gemäß den integrierten Identitäten 243 angeordnet werden.

Ferner wird in der gezeigten Ausführungsform in einem Debuggingschritt 143 ein Debuggingvorgang des Steuerprogramms 209 basierend auf der textuellen Zwischenrepräsentation 213 beziehungsweise der modifizierten textuellen Zwischenrepräsentation 227 ausgeführt.

Ferner umfasst der zweite Erzeugungsschritt 111 einen Binärcodeerzeugungsschritt 145. Im Binärcodeerzeugungsschritt 145 wird zum Erzeugen des Steuerprogramms 209 eine Binärdarstellung des Steuerprogramms 209 erzeugt.

Abschließend wird in einem Speicherschritt 147 die textuelle Zwischenrepräsentation 213 beziehungsweise die modifizierte textuelle Zwischenrepräsentation 227, auf der das erzeugte Steuerprogramm 209 basiert, in einer Darstellungsdatei 245 gespeichert.

### Bezugszeichenliste

- 100: Verfahren
- 101: Empfangsschritt
- 103: erster Erzeugungsschritt
- 105: erster Anzeigeschritt
- 107: erster Übersetzungsschritt
- 109: zweiter Anzeigeschritt
- 111: zweiter Erzeugungsschritt
- 113: grafischer Programmierschritt
- 115: Leseschritt
- 117: zweiter Übersetzungsschritt
- 119: textueller Programmierschritt
- 121: dritter Erzeugungsschritt
- 123: dritter Übersetzungsschritt
- 125: dritter Anzeigeschritt
- 127: vierter Anzeigeschritt
- 129: Verhaltensermittlungsschritt
- 131: Verhaltensübersetzungsschritt
- 133: Zeilenübersetzungsschritt
- 135: Anordnungsschritt
- 137: Identitätsermittlungsschritt
- 139: Integrationsschritt
- 141: Zusammenfassungsschritt
- 143: Debuggingschritt
- 145: Binärcodeerzeugungsschritt
- 147: Speicherschritt

- 200: Entwicklungsumgebung
- 201: grafische Editoreinheit
- 203: textuelle Editoreinheit
- 205: Übersetzungsmodul
- 207: Eingabedaten
- 209: Steuerprogramm
- 211: grafisches Diagramm
- 213: textuelle Zwischenrepräsentation
- 215: grafischer Eingabebefehl
- 217: grafisches Programmobjekt
- 219: ausführbares Programmobjekt
- 221: Programmdatei
- 223: textueller Eingabebefehl
- 225: textuelles Programmobjekt
- 227: modifizierte textuelle Zwischenrepräsentation
- 229: weiteres grafisches Programmobjekt
- 231: modifiziertes grafisches Diagramm
- 233: grafisches Verhalten
- 235: grafische Objektposition
- 237: textuelles Verhalten
- 239: Verhaltensposition
- 241: textuelle Zeile
- 243: Identität
- 245: Darstellungsdatei
- 247: weiteres textuelles Programmobjekt
- 249: Knotenobjekt
- 251: Kantenobjekt
- 253: textuelle Objektposition
- 255: textuelle Zusatzinformation

## Patentansprüche

1. Computerimplementiertes Verfahren (100) zum Generieren eines Steuerprogramms für ein Automatisierungssystem, umfassend:
Empfangen von Eingabedaten (207) für ein Steuerprogramm (209) eines Automatisierungssystems durch eine Entwicklungsumgebung (200) in einem Empfangsschritt (101), wobei die Eingabedaten (207) ein grafisches Diagramm (211) einer grafischen Programmiersprache beschreiben, und wobei das grafische Diagramm (211) wenigstens einen Teil eines Steuerprogramms (209) für ein Automatisierungssystem gemäß der grafischen Programmiersprache grafisch abbildet;
Erzeugen des grafischen Diagramms (211) der grafischen Programmiersprache basierend auf den Eingabedaten (207) durch eine grafische Editoreinheit (201) der Entwicklungsumgebung (200) in einem ersten Erzeugungsschritt (103);
Anzeigen des grafischen Diagramms (211) in der grafischen Editoreinheit (201) der Entwicklungsumgebung (200) in einem ersten Anzeigeschritt (105), **gekennzeichnet durch**:
Übersetzen des grafischen Diagramms (211) der grafischen Programmiersprache in eine textuelle Zwischenrepräsentation (213) des grafischen Diagramms (211) durch ein Übersetzungsmodul (205) der Entwicklungsumgebung (200) in einem ersten Übersetzungsschritt (107), wobei die textuelle Zwischenrepräsentation (213) eine textuelle Beschreibung des grafischen Diagramms (211) bereitstellt;
Anzeigen der textuellen Zwischenrepräsentation (213) des grafischen Diagramms (211) in einer textuellen Editoreinheit (203) der Entwicklungsumgebung (200) in einem zweiten Anzeigeschritt (109), wobei die textuelle Zwischenrepräsentation (213) in der textuellen Editoreinheit (203) in einer für eine Nutzerin/einen Nutzer der Entwicklungsumgebung (200) lesbaren Form angezeigt wird; und
Erzeugen des Steuerprogramms (209) basierend auf der textuellen Zwischenrepräsentation (213) des grafischen Diagramms (211) der grafischen Programmiersprache und/oder basierend auf dem grafischen Diagramm (211) in einem zweiten Erzeugungsschritt (111).

2. Verfahren (100) nach Anspruch 1, wobei der Empfangsschritt (101) umfasst:
Empfangen von grafischen Eingabebefehlen (215) eines Nutzers einer Entwicklungsumgebung (200) durch die grafische Editoreinheit (201) der Entwicklungsumgebung (200) in einem grafischen Programmierschritt (113), wobei die Eingabedaten (207) die grafischen Eingabebefehle (215) umfassen, wobei die grafischen Eingabebefehle (215) Programmierbefehle zu einem Hinzufügen und/oder einem Entfernen von grafischen Programmobjekten (217) des grafischen Diagramms (211) umfassen, und wobei die grafischen Programmobjekte (217) Teilelemente des grafischen Diagramms (211) sind und Programmobjekte (219) des Steuerprogramms (209) repräsentieren.

3. Verfahren (100) nach Anspruch 1 oder 2, wobei der Empfangsschritt (101) umfasst:
Einlesen einer Programmdatei (221) in einem Leseschritt (115), wobei in der Programmdatei (221) die Eingabedaten (207) des grafischen Diagramms (211) in textueller Form enthalten sind, wobei durch die Eingabedaten (207) die grafischen Programmobjekte (217) des grafischen Diagramms (211) textuell beschrieben sind;
Übersetzen der textuellen Eingabedaten (207) in das grafische Diagramm (211) durch das Übersetzungsmodul (205) in einem zweiten Übersetzungsschritt (117).

4. Verfahren (100) nach einem der voranstehenden Ansprüche, ferner umfassend:
Empfangen von textuellen Eingabebefehlen (223) des Nutzers durch die textuelle Editoreinheit (203) der Entwicklungsumgebung (200) in einem textuellen Programmierschritt (119), wobei durch die textuellen Eingabebefehle (223) textuelle Programmobjekte (225) als textuelle Repräsentationen von entsprechenden grafischen Programmobjekten (217) des grafischen Diagramms (211) zu der textuellen Zwischenrepräsentation (213) des grafischen Diagramms (211) hinzugefügt oder von dieser entfernt werden;
Erzeugen einer modifizierten textuellen Zwischenrepräsentation (227) basierend auf den textuellen Eingabebefehlen (223) und der textuellen Zwischenrepräsentation (213) des grafischen Diagramms (211) in einem dritten Erzeugungsschritt (121);
Übersetzen der modifizierten textuellen Zwischenrepräsentation (227) in ein entsprechend modifiziertes grafisches Diagramm (231) der grafischen Programmiersprache und/oder Übersetzen von durch die textuellen Eingabebefehle bewirkten textuellen Modifikationen der textuellen Zwischenrepräsentation (213) in grafische Modifikationen des grafischen Diagramms (211) durch das Übersetzungsmodul (205) in einem dritten Übersetzungsschritt (123), wobei die textuellen Modifikation wenigstens ein neu hinzugefügtes oder gelöschtes textuelles Programmobjekt (225) umfassen, und wobei die grafischen Modifikationen wenigstens ein neu hinzugefügtes oder gelöschtes grafisches Programmobjekt (217) umfassen;
Anzeigen des modifizierten grafischen Diagramms (231) anstelle des grafischen Diagramms (211) und/oder Anzeigen der grafischen Modifikationen im grafischen Diagramm (211) in der grafischen Editoreinheit (201) in einem dritten Anzeigeschritt (125); und
Erzeugen des Steuerprogramms (209) basierend auf der modifizierten textuellen Zwischenrepräsentation (227) des modifizierten grafischen Diagramms (231) und/oder basierend auf dem modifizierten grafischen Diagramm (231) im zweiten Erzeugungsschritt (111).

5. Verfahren (100) nach Anspruch 4, ferner umfassend:
Anzeigen der modifizierten textuellen Zwischenrepräsentation (227) des modifizierten grafischen Diagramms (231) in der textuellen Editoreinheit (203) in einem vierten Anzeigeschritt (127).

6. Verfahren (100) nach einem der voranstehenden Ansprüche, wobei der erste Übersetzungsschritt (107) ferner umfasst:
Ermitteln der grafischen Programmobjekte (217) und eines grafischen Verhaltens (233) des grafischen Diagramms (211) in einem Verhaltensermittlungsschritt (129), wobei das grafische Verhalten (233) eine grafische Repräsentation eines Programmablaufs des Steuerprogramms (209) beschreibt; und
Übersetzen der grafischen Programmobjekte (217) und des grafischen Verhaltens (233) des grafischen Diagramms (211) in textuelle Programmobjekte (225) und ein textuelles Verhalten (237) der textuellen Zwischenrepräsentation (213) in einem Verhaltensübersetzungsschritt (131), wobei das textuelle Verhalten (237) eine textuelle Zwischenrepräsentation (213) des Ablaufs des Steuerprogramms (209) darstellt.

7. Verfahren (100) nach einem der voranstehenden Ansprüche, wobei der erste Übersetzungsschritt (107) umfasst:
Ausführen einer zeilenweisen Übersetzung in einem Zeilenübersetzungsschritt (133), wobei in der zeilenweisen Übersetzung jedem grafischen Programmobjekt (217) wenigsten ein textuelles Programmobjekt (225) in Gestalt wenigstens einer textuellen Zeile (241) der textuellen Zwischenrepräsentation (213) zugeordnet wird, und wobei durch die textuellen Zeilen (241) eindeutige Beschreibungen der jeweiligen grafischen Programmobjekte (217) gegeben sind.

8. Verfahren (100) nach Anspruch 7, wobei der erste Übersetzungsschritt (107) umfasst:
Anordnen des textuellen Verhaltens an einer Verhaltensposition (239) innerhalb der textuellen Zwischenrepräsentation (213) in einem Anordnungsschritt (135), wobei die Verhaltensposition (239) eine durch eine Norm IEC 61131-3 vordefinierte Position in einem Programmcode definiert, an der ein Verhalten eines Steuerprogramms zu positionieren ist.

9. Verfahren (100) nach Anspruch 7, wobei der erste Erzeugungsschritt (103) umfasst:
Ermitteln von Identitäten (243) der grafischen Programmobjekte (217) des grafischen Diagramms (211) in einem Identitätsermittlungsschritt (137), wobei über die Identitäten (243) der grafischen Programmobjekte (217) eine eindeutige Identifizierung der jeweiligen grafischen Programmobjekte (217) ermöglicht ist; und wobei der Zeilenübersetzungsschritt (133) umfasst:
Integrieren der Identitäten (243) der grafischen Programmobjekte (217) in die jeweiligen den grafischen Programmobjekten (217) zugeordneten und in textuellen Zeilen (241) abgefassten textuellen Programmobjekte (225) der textuellen Zwischenrepräsentation (213) in einem Integrationsschritt (139).

10. Verfahren (100) nach einem der voranstehenden Ansprüche, ferner umfassend:
Zusammenfassen der textuellen Zwischenrepräsentation (213) des grafischen Diagramms (211) mit wenigstens einer weiteren Zwischenrepräsentation wenigstens eines weiteren grafischen Diagramms zu einer textuellen Gesamtzwischenrepräsentation in einem Zusammenfassungsschritt (141), wobei in der Gesamtzwischenrepräsentation eine Mehrzahl von verschiedenen textuellen Zwischenrepräsentationen (213) einer Mehrzahl verschiedener grafischer Diagramme (211) zu einem zusammenhängenden Code in textueller Form zusammengefasst sind.

11. Verfahren (100) nach einem der voranstehenden Ansprüche, wobei der zweite Erzeugungsschritt (111) umfasst:
Ausführen eines Debugging-Vorgangs basierend auf der textuellen Zwischenrepräsentation (213) des grafischen Diagramms (211) in einem Debuggingschritt (143).

12. Verfahren (100) nach einem der voranstehenden Ansprüche, wobei der zweite Erzeugungsschritt (111) umfasst:
Erzeugen einer Binärdarstellung des Steuerprogramms (209) in einem Binärcodeerzeugungsschritt (145).

13. Verfahren (100) nach einem der voranstehenden Ansprüche, ferner umfassend:
Speichern der textuellen Darstellung in einer Darstellungsdatei (245) in einem Speicherschritt (147), und/oder wobei die grafische Programmiersprache eine aus der folgenden Gruppe ist: Kontaktplan, Funktionsbausteinsprache, Ablaufsprache.

14. Verfahren (100) nach einem der voranstehenden Ansprüche 4 bis 5, wobei eine Syntax der textuellen Zwischenrepräsentation (213) und der modifizierten textuellen Zwischenrepräsentation (227) in einer Konfliktfreiheit zu einer Syntax der grafischen Programmiersprache steht.

15. Entwicklungsumgebung (200) mit einem einer grafischen Editoreinheit (201), einer textuellen Editoreinheit (203) und einem Übersetzungsmodul (205), wobei die Entwicklungsumgebung (200) eingerichtet ist, das Verfahren (100) nach einem der voranstehenden Ansprüche 1 bis 14 auszuführen.

## Claims

1. A computer-implemented method (100) for generating a control program for an automation system, comprising:
receiving input data (207) for a control program (209) of an automation system from a development environment (200) in a receiving step (101), wherein the input data (207) describe a graphical diagram (211) of a graphical programming language, and wherein the graphical diagram (211) graphically represents at least a part of a control program (209) for an automation system according to the graphical programming language;
generating the graphical diagram (211) of the graphical programming language based on the input data (207) by a graphical editor unit (201) of the development environment (200) in a first generating step (103);
displaying the graphical diagram (211) in the graphical editor unit (201) of the development environment (200) in a first displaying step (105), **characterized by**:
translating the graphical diagram (211) of the graphical programming language into a textual intermediate representation (213) of the graphical diagram (211) by a translation module (205) of the development environment (200) in a first translating step (107); wherein the textual intermediate representation (213) provides a textual description of the graphical diagram (211);
displaying the textual intermediate representation (213) of the graphical diagram (211) in a textual editor unit (203) of the development environment (200) in a second displaying step (109), wherein the textual intermediate representation (213) is displayed in the textual editor unit (203) in a form readable for a user of the development environment (200); and
generating the control program (209) based on the textual intermediate representation (213) of the graphical diagram (211) of the graphical programming language and/or based on the graphical diagram (211) in a second generating step (111).

2. The method (100) according to claim 1, wherein the receiving step (101) comprises: receiving graphical input commands (215) from a user of a development environment (200) via the graphical editor unit (201) of the development environment (200) in a graphical programming step (113), wherein the input data (207) comprise graphical input commands (215), wherein the graphical input commands (215) comprise programming commands for adding and/or removing graphical program objects (217) of the graphical diagram (211), and wherein the graphical program objects (217) are partial elements of the graphical diagram (211) and represent program objects (219) of the control program (209).

3. The method (100) according to claim 1 or 2, wherein the receiving step (101) comprises:
reading in a program file (221) in a reading step (115), wherein the program file (221) contains the input data (207) of the graphical diagram (211) in textual form, wherein the graphical program objects (217) of the graphical diagram (211) are described textually by the input data (207);
translating the textual input data (207) into the graphical diagram (211) by the translation module (205) in a second translating step (117).

4. The method (100) according to any one of the preceding claims, further comprising:
receiving textual input commands (223) from the user via the textual editor unit (203) of the development environment (200) in a textual programming step (119), wherein textual program objects (225) as textual representations of corresponding graphical program objects (217) of the graphical diagram (211) are added to the textual intermediate representation (213) of the graphical diagram (211) or removed therefrom with the aid of the textual input commands (223)
generating a modified textual intermediate representation (227) based on the textual input commands (223) and the textual intermediate representation (213) of the graphical diagram (211) in a third generating step (121);
translating the modified textual intermediate representation (227) into a correspondingly modified graphical diagram (231) of the graphical programming language and/or translating textual modifications of the textual intermediate representation (213) caused by the textual input commands into graphical modifications of the graphical diagram (211) with the aid of the translation module (205) in a third translating step (123), wherein the textual modifications comprise at least one newly added or deleted textual program object (225), and wherein the graphical modifications comprise at least one newly added or deleted graphical program object (217);
displaying the modified graphical diagram (231) instead of the graphical diagram (211) and/or displaying the graphical modifications in the graphical diagram (211) in the graphical editor unit (201) in a third displaying step (125); and
generating the control program (209) based on the modified textual intermediate representation (227) of the modified graphical diagram (231) and/or based on the modified graphical diagram (231) in the second generating step (111).

5. The method (100) according to claim 4, further comprising:
displaying the modified textual intermediate representation (227) of the modified graphical diagram (231) in the textual editor unit (203) in a fourth displaying step (127).

6. The method (100) according to any one of the preceding claims, wherein the first translating step (107) further comprises:
determining the graphical program objects (217) and a graphical behavior (233) of the graphical diagram (211) in a behavior determining step (129), wherein the graphical behavior (233) describes a graphical representation of a program flow of the control program (209); and
translating the graphical program objects (217) and the graphical behavior (233) of the graphical diagram (211) into textual program objects (225) and a textual behavior (237) of the textual intermediate representation (213) in a behavior translating step (131), wherein the textual behavior (237) represents a textual intermediate representation (213) of the execution of the control program (209).

7. The method (100) according to any one of the preceding claims, wherein the first translating step (107) comprises:
carrying out a line-by-line translation in a line translating step (133), wherein in the line-by-line translation, each graphical program object (217) is assigned at least one textual program object (225) in the form of at least one textual line (241) of the textual intermediate representation (213), and wherein the textual lines (241) contain unique descriptions of the respective graphical program objects (217).

8. The method (100) according to claim 7, wherein the first translating step (107) comprises:
arranging the textual behavior at a behavior position (239) within the textual intermediate representation (213) in an arranging step (135), wherein the behavior position (239) defines a position predefined by an IEC 61131-3 standard in a program code at which a behavior of a control program is to be positioned.

9. The method (100) according to claim 7, wherein the first generating step (103) comprises:
determining identities (243) of the graphical program objects (217) of the graphical diagram (211) in an identity determining step (137), wherein the identities (243) of the graphical program objects (217) allow for unique identification of the respective graphical program objects (217); and wherein the line translating step (133) comprises:
integrating the identities (243) of the graphical program objects (217) into the respective program objects (225) of the textual intermediate representation (213) assigned to the graphical program objects (217) and written in textual lines (241) in an integrating step (139).

10. The method (100) according to any one of the preceding claims, further comprising: summarizing the textual intermediate representation (213) of the graphical diagram (211) with at least one further intermediate representation of at least one further graphical diagram to form a textual overall intermediate representation in a summarizing step (141), wherein the overall intermediate representation summarizes a plurality of different textual intermediate representations (213) of a plurality of different graphical diagrams (211) into a coherent code in textual form.

11. The method (100) according to any one of the preceding claims, wherein the second generating step (111) comprises:
carrying out a debugging process based on the textual intermediate representation (213) of the graphical diagram (211) in a debugging step (143).

12. The method (100) according to any of the preceding claims, wherein the second generating step (111) comprises:
generating a binary representation of the control program (209) in a binary code generating step (145).

13. The method (100) according to any one of the preceding claims, further comprising: storing the textual representation in a representation file (245) in a storing step (147), and/or wherein the graphical programming language is any one of the following: contact diagram, function block language, flowchart language.

14. The method (100) according to any one of preceding claims 4 to 5, wherein a syntax of the textual intermediate representation (227) and the modified textual intermediate representation (213) is conflict-free with a syntax of the graphical programming language.

15. A development environment (200) having a graphical editor unit (201), a textual editor unit (203) and a translation module (205), wherein the development environment (200) is set up to carry out the method (100) according to any one of the preceding claims 1 to 14.

## Revendications

1. Procédé mis en œuvre par ordinateur (100) pour générer un programme de commande pour un système d'automatisation, comprenant :
la réception de données de saisie (207) pour un programme de commande (209) d'un système d'automatisation par un environnement de développement (200) dans une étape de réception (101), les données de saisie (207) décrivant un diagramme graphique (211) d'un langage de programmation graphique, et le diagramme graphique (211) représentant graphiquement au moins une partie d'un programme de commande (209) pour un système d'automatisation conformément au langage de programmation graphique ;
la génération du diagramme graphique (211) du langage de programmation graphique sur la base des données de saisie (207) par une unité d'édition graphique (201) de l'environnement de développement (200) dans une première étape de génération (103) ;
l'affichage du diagramme graphique (211) dans l'unité d'édition graphique (201) de l'environnement de développement (200) dans une première étape d'affichage (105), **caractérisé par** :
la traduction du diagramme graphique (211) du langage de programmation graphique en une représentation intermédiaire textuelle (213) du diagramme graphique (211) par un module de traduction (205) de l'environnement de développement (200) dans une première étape de traduction (107), la représentation intermédiaire textuelle (213) fournissant une description textuelle du diagramme graphique (211) ;
l'affichage de la représentation intermédiaire textuelle (213) du diagramme graphique (211) dans une unité d'édition textuelle (203) de l'environnement de développement (200) dans une deuxième étape d'affichage (109), la représentation intermédiaire textuelle (213) étant affichée dans l'unité d'édition textuelle (203) sous une forme lisible par une utilisatrice / un utilisateur de l'environnement de développement (200) ; et
la génération du programme de commande (209) sur la base de la représentation intermédiaire textuelle (213) du diagramme graphique (211) du langage de programmation graphique et/ou sur la base du diagramme graphique (211) dans une deuxième étape de génération (111).

2. Procédé (100) selon la revendication 1, l'étape de réception (101) comprenant :
la réception d'instructions de saisie graphiques (215) d'un utilisateur d'un environnement de développement (200) par l'unité d'édition graphique (201) de l'environnement de développement (200) dans une étape de programmation graphique (113), les données de saisie (207) comprenant les instructions de saisie graphiques (215), les instructions de saisie graphiques (215) comprenant des instructions de programmation destinées à un ajout et/ou un retrait d'objets de programme graphiques (217) du diagramme graphique (211), et les objets de programme graphiques (217) état des éléments partiels du diagramme graphique (211) et représentant des objets de programme (219) du programme de commande (209).

3. Procédé (100) selon la revendication 1 ou 2, l'étape de réception (101) comprenant :
la lecture d'un fichier de programme (221) dans une étape de lecture (115), les données de saisie (207) du diagramme graphique (211) étant contenues dans le fichier de programme (221) sous forme textuelle, les objets de programme graphique (217) du diagramme graphique (211) étant décrits textuellement par les données de saisie (207) ;
la traduction des données de saisie (207) textuelles en le diagramme graphique (211) par le module de traduction (205) dans une deuxième étape de traduction (117).

4. Procédé (100) selon l'une des revendications précédentes, comprenant en outre :
la réception d'instructions de saisie textuelles (223) de l'utilisateur par l'unité d'édition textuelle (203) de l'environnement de développement (200) dans une étape de programmation textuelle (119), des objets de programme textuels (225) sous la forme de représentations textuelles d'objets de programme graphiques (217) correspondants du diagramme graphique (211) étant ajoutés à la représentation intermédiaire textuelle (213) du diagramme graphique (211) ou en étant retirés de celle-ci par les instructions de saisie textuelles (223) ;
la génération d'une représentation intermédiaire textuelle modifiée (227) sur la base des instructions de saisie textuelles (223) et de la représentation intermédiaire textuelle (213) du diagramme graphique (211) dans une troisième étape de génération (121) ;
la traduction de la représentation intermédiaire textuelle modifiée (227) en un diagramme graphique modifié (231) correspondant du langage de programmation graphique et/ou la traduction de modifications textuelles de la représentation intermédiaire textuelle (213) produites par les instructions de saisie textuelles en modifications graphiques du diagramme graphique (211) par le module de traduction (205) dans une troisième étape de traduction (123), la modification textuelle comprenant au moins un objet de programme textuel (225) nouvellement ajouté ou supprimé, et les modifications graphiques comprenant au moins un objet de programme graphique (217) nouvellement ajouté ou supprimé ;
l'affichage du diagramme graphique modifié (231) à la place du diagramme graphique (211) et/ou l'affichage des modifications graphiques dans le diagramme graphique (211), dans l'unité d'édition graphique (201), dans une troisième étape d'affichage (125) ; et
la génération du programme de commande (209) sur la base de la représentation intermédiaire textuelle modifiée (227) du diagramme graphique modifié (231) et/ou sur la base du diagramme graphique modifié (231) dans la deuxième étape de génération (111).

5. Procédé (100) selon la revendication 4, comprenant en outre :
l'affichage de la représentation intermédiaire textuelle modifiée (227) du diagramme graphique modifié (231), dans l'unité d'édition textuelle (203), dans une quatrième étape d'affichage (127).

6. Procédé (100) selon l'une des revendications précédentes, la première étape de traduction (107) comprenant en outre :
la détermination des objets de programme graphiques (217) et d'un comportement graphique (233) du diagramme graphique (211) dans une étape de détermination de comportement (129), le comportement graphique (233) décrivant une représentation graphique d'un déroulement de programme du programme de commande (209) ; et
la traduction des objets de programme graphiques (217) et du comportement graphique (233) du diagramme graphique (211) en objets de programme textuels (225) et en un comportement textuel (237) de la représentation intermédiaire textuelle (213) dans une étape de traduction de comportement (131), le comportement textuel (237) représentant une représentation intermédiaire textuelle (213) du déroulement du programme de commande (209).

7. Procédé (100) selon l'une des revendications précédentes, la première étape de traduction (107) comprenant :
l'exécution d'une traduction ligne par ligne dans une étape de traduction par ligne (133), au moins un objet de programme textuel (225) sous la forme d'au moins une ligne textuelle (241) de la représentation intermédiaire textuelle (213) étant associé à chaque objet de programme graphique (217) dans la traduction ligne par ligne, et
des descriptions univoques des objets de programme graphiques (217) respectifs étant données par les lignes textuelles (241).

8. Procédé (100) selon la revendication 7, la première étape de traduction (107) comprenant :
la disposition du comportement textuel au niveau d'une position de comportement (239) à l'intérieur de la représentation intermédiaire textuelle (213) dans une étape de disposition (135), la position de comportement (239) définissant une position prédéfinie par une norme IEC 61131-3 dans un code de programme, au niveau de laquelle doit être positionné un comportement d'un programme de commande.

9. Procédé (100) selon la revendication 7, la première étape de génération (103) comprenant :
la détermination d'identités (243) des objets de programme graphiques (217) du diagramme graphique (211) dans une étape de détermination d'identité (137), une identification unique des objets de programme graphiques (217) respectifs étant rendue possible par l'intermédiaire des identités (243) des objets de programme graphiques (217) ; et l'étape de traduction par ligne (133) comprenant :
l'intégration des identités (243) des objets de programme graphiques (217) dans les objets de programme textuel (225) respectifs de la représentation intermédiaire textuelle (213) associés aux objets de programme graphiques (217) et rédigés dans des lignes textuelles (241) dans une étape d'intégration (239).

10. Procédé (100) selon l'une des revendications précédentes, comprenant en outre :
le regroupement de la représentation intermédiaire textuelle (213) du diagramme graphique (211) avec au moins une représentation intermédiaire supplémentaire d'au moins un diagramme graphique supplémentaire en une représentation intermédiaire globale textuelle dans une étape de regroupement (141), une pluralité de différentes représentations intermédiaires textuelles (213) d'une pluralité de diagrammes graphiques (211) différents étant regroupées en un code cohérent sous forme textuelle dans la représentation intermédiaire globale.

11. Procédé (100) selon l'une des revendications précédentes, la deuxième étape de génération (111) comprenant :
l'exécution d'un processus de débogage basé sur la représentation intermédiaire textuelle (213) du diagramme graphique (211) dans une étape de débogage (143).

12. Procédé (100) selon l'une des revendications précédentes, la deuxième étape de génération (111) comprenant :
la génération d'une représentation binaire du programme de commande (209) dans une étape de génération de code binaire (145).

13. Procédé (100) selon l'une des revendications précédentes, comprenant en outre :
l'enregistrement de la représentation textuelle dans un fichier de représentation (245) dans une étape d'enregistrement (147) et/ou le langage de programmation graphique étant l'un des groupes suivants : langage à contacts, langage à blocs fonctionnels, langage grafcet.

14. Procédé (100) selon l'une des revendications précédentes 4 et 5, une syntaxe de la représentation intermédiaire textuelle (213) et de la représentation intermédiaire textuelle modifiée (227) étant exempte de conflit avec une syntaxe du langage de programmation graphique.

15. Environnement de développement (200) comprenant une unité d'édition graphique (201), une unité d'édition textuelle (203) et un module de traduction (205), l'environnement de développement (200) étant conçu pour mettre en œuvre le procédé (100) selon l'une des revendications précédentes 1 à 14.
